# EUROPEAN PATENT SPECIFICATION

(11) **EP 3 316 069 B1**
(45) Date of publication and mention of the grant of the patent: **21.04.2021**
(21) Application number: 17199053.4
(22) Date of filing: 27.10.2017
(51) Int. Cl.: G05D 7/01, B05B 12/08

(54) **FLOW REGULATING PUMP, SYSTEM, AND METHOD**
FLUSSREGULIERENDE PUMPE, SYSTEM UND VERFAHREN
POMPE DE RÉGULATION DE DÉBIT, SYSTÈME ET PROCÉDÉ

(30) Priority: 28.10.2016 US 201662414168 P; 06.10.2017 US 201715727188
(43) Date of publication of application: 02.05.2018
(73) Proprietor: Graco Minnesota Inc., Minneapolis, MN 55413 (US)
(72) Inventor: ANDERSON, Todd A, Elk River, MN 55330 (US); NGUYEN, Vu K, Brooklyn Park, MN 55443 (US); BOSCHERT, Paul F, Minneapolis, MN 55408 (US)
(74) Representative: Miller Sturt Kenyon

(56) References cited:
- WO-A1-2015/105700
- WO-A1-2015/168099
- US-A1- 2007 040 454
- US-A1- 2013 315 750
- US-A1- 2015 050 166

## Description

### BACKGROUND

This disclosure relates generally to flow control. More particularly, this disclosure relates to a system and method for isolating a downstream flow from an upstream flow.

Materials, such as paint, water, oil, stains, finishes, epoxies, aggregate, coatings, adhesives, sealants, and solvents, among other options, can require low pressures and flow rates for application. Fluid regulating devices, such as control valves and pressure regulators, can be used to alter the upstream fluid pressure to a downstream material flow rate and/or pressure. The downstream pressure and/or flow rate provided by the flow regulating devices are dependent on the upstream pressure. Where the material is a plural component material, the material supply can have a minimum flow rate and pressure much higher than the desired downstream flow rate and pressure. The differential between the desired downstream flow rate and the minimum flow rate from the material supply can affect the accuracy of the mix ratio.

US 2015/050166 discloses reciprocating positive-displacement pumps used to pump fluids, such as a biological fluid (e.g. blood or peritoneal fluid), a therapeutic fluid (e.g. a medication solution), or a surfactant fluid. The pumps may be configured specifically to impart low shear forces and low turbulence on the fluid as the fluid is pumped from an inlet to an outlet.

US 2013/315750 discloses motor valves and actuators associated with such motor valves. More particularly, the document relates to an electro-hydraulic positioner for such actuators so that the valve can be opened, closed or partially opened. The document also relates to a method for positioning an actuator for a motor valve. The method utilizes a hydraulic liquid.

WO 2015/105700 and US 2007/040454 are also relevant.

### SUMMARY

According to a first aspect of the invention, there is provided a regulator pump as defined in claim 1.

According to a second aspect of the invention, there is provided a flow regulating system as defined in claim 5.

According to a third aspect of the invention, there is provided a method of flow control as defined in claim 14.

### BRIEF DESCRIPTION OF THE DRAWINGS

FIG. 1 is a schematic block diagram of a flow regulating system.
FIG. 2 is a schematic block diagram of a flow regulating system.
FIG. 3 is a schematic block diagram of a flow regulating system having multiple regulator pumps.
FIG. 4 is a schematic block diagram of a flow regulating system having multiple regulator pumps.
FIG. 5A is an isometric view of a regulator pump.
FIG. 5B is a cross-sectional view of the regulator pump of FIG. 5A taken along line B-B in FIG. 5A.
FIG. 6A is an isometric view of a regulator pump.
FIG. 6B is a cross-sectional view of the regulator pump of FIG. 6A taken along line B-B in FIG. 6A.
FIG. 6C is a cross-sectional view of the regulator pump of FIG. 6A taken along line C-C in FIG. 6A.
FIG. 6D is a cross-sectional view of the regulator pump of FIG. 6A taken along line D-D in FIG. 6A.
FIG. 7A is a flow diagram of a regulator pump refill cycle.
FIG. 7B is a flow diagram of a regulator pump dispense cycle.
FIG. 8 is a flow diagram depicting a method of dispensing material in a multiple regulator pump system.

### DETAILED DESCRIPTION

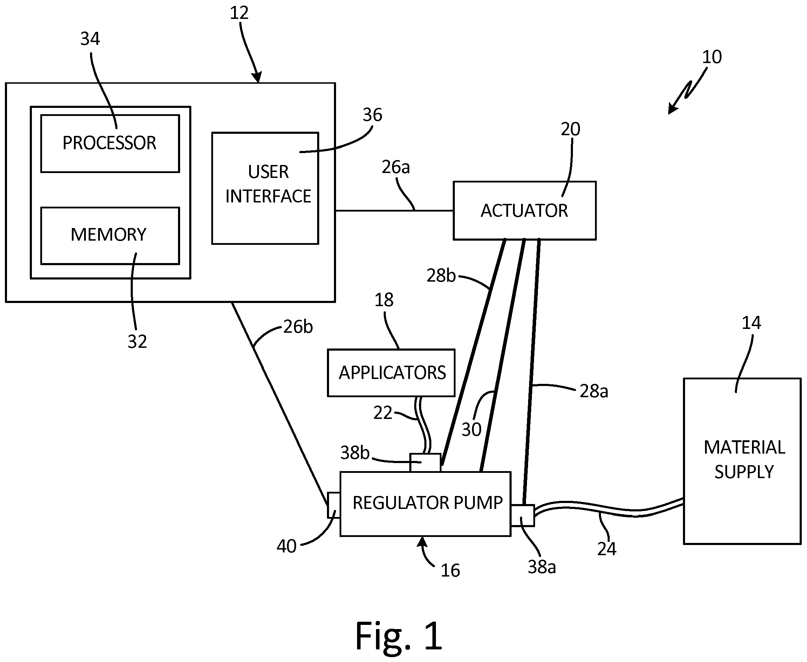

FIG. 1 is a schematic block diagram flow regulating system 10. Flow regulating system 10 includes controller 12, material supply 14, regulator pump 16, applicators 18, actuator 20, low pressure hose 22, high pressure hose 24, communication links 26a and 26b, actuator lines 28a and 28b, and pressure line 30. Controller 12 includes memory 32, processor 34, and user interface 36. Regulator pump 16 includes inlet valve 38a, outlet valve 38b, and status sensor 40.

Inlet valve 38a is disposed on regulator pump 16 and controls a flow of material into regulator pump 16. Outlet valve 38b is similarly disposed on regulator pump 16 and controls a flow of material out of regulator pump 16. Material supply 14 is connected to inlet valve 38a by high pressure hose 24. Material supply 14 provides a flow of material to regulator pump 16 at an upstream pressure. Applicators 18 are connected to outlet valve 38b by low pressure hose 22. Regulator pump 16 drives the material received from material supply 14 downstream to applicators 18 at a downstream pressure, isolated from and independent of the upstream pressure. Applicators 18 are configured to apply the material received from regulator pump 16 at a desired location.

Actuator 20 is connected to inlet valve 38a by actuator line 28a and connected to outlet valve 38b by actuator line 28b. Actuator 20 is configured to control the positions of inlet valve 38a and outlet valve 38b between an open position and a closed position. For example, actuator 20 can provide a flow of motive fluid, such as air or a hydraulic fluid, to cause the shift between the open and closed positions. In one example, actuator 20 includes a three-way valve, such as a three-way solenoid valve, to control the flow of motive fluid to one of inlet valve 38a and outlet valve 38b, while venting motive fluid from the other of inlet valve 38a and outlet valve 38b. Actuator 20 controls the positions of inlet valve 38a and outlet valve 38b such that outlet valve 38b is open only when inlet valve 38a is closed, and inlet valve 38a is open when outlet valve 38b is closed. As such, the downstream pressure remains isolated from and unaffected by the upstream pressure. While actuator 20 is described as shifting inlet valve 38a and outlet valve 38b with motive fluid, it is understood that actuator can cause inlet valve 38a and outlet valve 38b to shift in any desired manner.

Actuator 20 is connected to regulator pump 16 by pressure line 30. Actuator 20 is configured to control regulator pump 16 to cause regulator pump 16 to generate and maintain the downstream pressure in low pressure hose 22. In some examples, actuator 20 can provide a working fluid, such as air or hydraulic fluid, to regulator pump 16 to drive a fluid displacement member of regulator pump 16, such as a diaphragm or piston, such that the fluid displacement member drives the material downstream through outlet valve 38b. It is understood, however, that actuator 20 can be of any desired configuration for controlling inlet valve 38a and outlet valve 38b, such as pneumatically controlled, motor controlled, electrically controlled, or of any other desired configuration.

Controller 12 communicates with actuator 20 via communication link 26a. Controller 12 is configured to provide commands to actuator 20 to control the position of inlet valve 38a and outlet valve 38b, and to control the downstream pressure generated by regulator pump 16.

Controller 12 communicates with status sensor 40 via communication link 26b. Status sensor 40 is configured to monitor regulator pump 16, such as whether regulator pump 16 should enter a refill cycle, has completed a refill cycle, and/or is ready for a dispense cycle, among others. Status sensor 40 can provide the regulator pump status to controller 12 via communication link 26b. For example, status sensor 40 can sense that the volume of material remaining in regulator pump 16 has reached a refill level. In response to status sensor 40 sensing the refill level, status sensor 40 can generate a fill signal indicating that regulator pump 16 needs to be refilled and can communicate the fill signal to controller 12 via communication link 26b. Status sensor 40 can further sense when regulator pump 16 has been filled and has thus completed the refill cycle. When regulator pump 16 has completed the refill cycle, regulator pump 16 is ready to proceed through a dispense cycle and dispense material downstream to applicators 18. Status sensor 40 can generate a pump full signal in response to sensing that the regulator pump 16 is full of material, and can communicate the pump full signal to controller 12.

While controller 12 is shown as communicating through communication links 26a and 26b, it is understood that controller 12 can communicate with actuator 20 and regulator pump 16 in any desired manner, such as wireless networks or wired networks or both. In some examples, actuator 20 can be integrated into controller 12. User interface 36 allows a user to provide inputs to and receive outputs from controller 12. User interface 36 can be of any suitable configuration for, such as a keyboard, touchscreen, or other suitable interface device.

Memory 32 stores software that, when executed by processor 34, commands inlet valve 38a and outlet valve 38b between an open position and a closed position. Memory 32 further stores software that, when executed by processor 34, provides controls regulator pump 16 to provide a desired downstream pressure and/or flow rate of material.

Processor 34, in one example, is configured to implement functionality and/or process instructions. For instance, processor 34 can be capable of processing instructions stored in memory 32. Examples of processor 34 can include any one or more of a microprocessor, a controller, a digital signal processor (DSP), an application specific integrated circuit (ASIC), a field-programmable gate array (FPGA), or other equivalent discrete or integrated logic circuitry.

Memory 32, in some examples, can be configured to store information during operation. Memory 32, in some examples, is described as computer-readable storage media. In some examples, a computer-readable storage medium can include a non-transitory medium. The term "non-transitory" can indicate that the storage medium is not embodied in a carrier wave or a propagated signal. In certain examples, a non-transitory storage medium can store data that can, over time, change (e.g., in RAM or cache). In some examples, memory 32 is a temporary memory, meaning that a primary purpose of memory 32 is not long-term storage. Memory 32, in some examples, is described as volatile memory, meaning that memory 32 does not maintain stored contents when power to controller 12 is turned off. Examples of volatile memories can include random access memories (RAM), dynamic random access memories (DRAM), static random access memories (SRAM), and other forms of volatile memories. In some examples, memory 32 is used to store program instructions for execution by processor 34. Memory 32, in one example, is used by software or applications running on controller 12 to temporarily store information during program execution.

Memory 32, in some examples, can also include one or more computer-readable storage media. Memory 32 can be configured to store larger amounts of information than volatile memory. Memory 32 can further be configured for long-term storage of information. In some examples, memory 32 includes non-volatile storage elements. Examples of such non-volatile storage elements can include magnetic hard discs, optical discs, floppy discs, flash memories, or forms of electrically programmable memories (EPROM) or electrically erasable and programmable (EEPROM) memories.

Regulator pump 16 is configured to isolate the downstream flow of material to applicators 18 from the upstream flow of material provided by material supply 14. As such, the downstream pressure is independent of and unaffected by the upstream pressure. By way of example, a refill cycle and a dispense cycle of regulator pump 16 will be discussed below.

During operation, regulator pump 16 drives the material downstream through outlet valve 38b and low pressure hose 22 at a desired downstream pressure. As regulator pump 16 drives the material downstream, inlet valve 38a remains in the closed position to ensure that the upstream pressure has no effect on the downstream pressure generated by regulator pump 16. When status sensor 40 senses that the material in regulator pump 16 reaches the refill volume status sensor 40 can generate the fill signal indicating that regulator pump 16 should enter the refill cycle. Status sensor 40 communicates the fill signal to controller 12. Controller 12 can generate a fill command based on the fill signal. While controller 12 is described as generating the fill command based on the fill signal, it is understood that controller 12 can generate the fill command based on one or more signals. For example, where flow controlling system 10 includes a single regulator pump 16, controller 12 can generate the fill command based on receiving the fill signal and an end-of-application signal indicating that the current application cycle at applicators 18 is complete. Generating the fill command based at least in part on the end-of-application signal ensures that regulator pump 16 does not begin the refill cycle while applicators 18 are applying the material.

Outlet valve 38b shifts to the closed position and inlet valve 38a shifts to the open position in response to the fill command. Controller 12 can provide the fill command to actuator 20 to cause actuator 20 to shift outlet valve 38b and inlet valve 38a. For example, actuator 20 can vent the motive fluid from outlet valve 38b, causing outlet valve 38b to close, and can supply motive fluid to inlet valve 38a, causing inlet valve 38a to open. With outlet valve 38b in the closed positon, any material within regulator pump 16 is isolated from low pressure hose 22 such that a pressure within regulator pump 16 has no effect on the downstream fluid pressure. With inlet valve 38a in the open position, material flows into regulator pump 16 from high pressure hose 24 and material supply 14. Material supply 14 drives the material through high pressure hose 24 at any upstream pressure required to maintain the integrity and desired material properties of the material being supplied. For example, where material supply 14 provides a multiple component material, the pressure required to accurately provide and maintain the desired mix ratio of the multiple component material can be significantly higher than the desired downstream pressure at applicators 18, particularly at high mix ratios, such as 30:1 or higher.

Material supply 14 continues to drive material into regulator pump 16. Status sensor 40 can sense when regulator pump 16 is refilled and can generate a pump full signal based on regulator pump 16 being refilled. Status sensor 40 can provide the pump full signal to controller 12, and controller 12 can generate a command based on the pump full signal. The pump full signal indicates that regulator pump 16 has completed the refill cycle and is primed for the dispense cycle. In some examples, controller 12 can generate a valve close command based on the pump full signal. Inlet valve 38a can shift to the closed position in response to the valve close command. In other examples, inlet valve 38a can remain open such that the material deadheads within regulator pump 16 until regulator pump 16 enters the dispense cycle.

During the dispense cycle, inlet valve 38a is closed and outlet valve 38b is opened. Regulator pump 16 drives the material downstream through outlet valve 38b to generate the downstream pressure and flow rate. Controller 12 can generate a dispense command based on the pump full signal. In some examples, inlet valve 38a shifts to the closed position and outlet valve 38b shifts to the open position in response to the dispense command. For example, controller 12 can communicate the dispense command to actuator 20, and actuator 20 can vent the motive fluid from inlet valve 38a, causing inlet valve 38a to close, and can supply motive fluid to outlet valve 38b, causing outlet valve 38b to open. With inlet valve 38a closed, any material downstream of inlet valve 38a is isolated from the upstream pressure. With outlet valve 38b open, regulator pump 16 is fluidly connected to low pressure hose 22 and can drive material downstream through outlet valve 38b.

Regulator pump 16 is configured to drive the material downstream through low pressure hose 22 and to applicators 18 in response to the dispense command. In some examples, actuator 20 provides working fluid, such as compressed air or hydraulic fluid, to regulator pump 16 through pressure line 30 to generate a driving pressure within regulator pump 16. Regulator pump 16 can be configured such that the downstream pressure in low pressure hose 22 has any desired pressure ratio with the working fluid. For example, regulator pump 16 can provide a 1:1 pressure ratio between the working fluid pressure and the downstream pressure. As such, controlling the working fluid pressure controls the downstream pressure. While regulator pump 16 is described as generating the downstream pressure based on the working fluid pressure, it is understood that regulator pump 16 can generate the downstream pressure in any suitable manner. For example, the fluid displacement member of regulator pump 16 can be electronically controlled, such as by a solenoid. Outlet valve 38b can remain in the open position throughout the dispense cycle to maintain the downstream pressure within low pressure hose 22. As such, the material within low pressure hose 22 remains pressurized and ready to dispense when applicators 18 are activated. It is further understood that downstream flow and/or pressure regulators can be utilized to further control the downstream pressure at applicators 18.

Actuator 20 can receive feedback to continuously monitor the working fluid pressure to maintain the desired downstream pressure. For example, a pressure sensor or flow rate sensor can be connected to low pressure hose and/or applicators 18 to provide feedback to actuator 20. Regulator pump 16 can continue to supply the material to applicators 18 throughout the dispense cycle until status sensor 40 generates the fill signal, thereby indicating that regulator pump 16 should again enter the refill cycle.

Fluid regulating system 10 provides significant advantages. Regulator pump 16 fully isolates the downstream pressure within low pressure hose 22 from the upstream pressure within high pressure hose 24 such that the downstream pressure is unaffected by the upstream pressure. Isolating the upstream pressure from the downstream pressure allows the material to be applied from regulator pump 16 at low flow rates, such as about 0.03-0.07 fl. oz/min. (1-2 cc/min.), while being supplied to regulator pump 16 at relatively high flow rates, such as about 0.4 fl.oz/min. (12 cc/min.) or higher. Moreover, isolating the upstream pressure from the downstream pressure increases the consistency of the material provided to applicators 18. Where the material is a multiple component material, the material may require a high mix ratio, the accuracy of which are difficult to maintain at low flow rates. As such, regulator pump 16 allows the material to be mixed at the high mix ratio and at a high flow rate to ensure that regulator pump 16 receives the mixed material at the desired ratio. Regulator pump 16 provides the mixed material, which is already at the desired mix ratio, to applicators 18 at whatever fluid pressure and flow rate is desired. Moreover, where regulator pump 16, including inlet valve 38a and outlet valve 38b, are pneumatically controlled, such as by actuator 20, flow regulating system 10 can be utilized in Class I, Division I, hazardous locations.

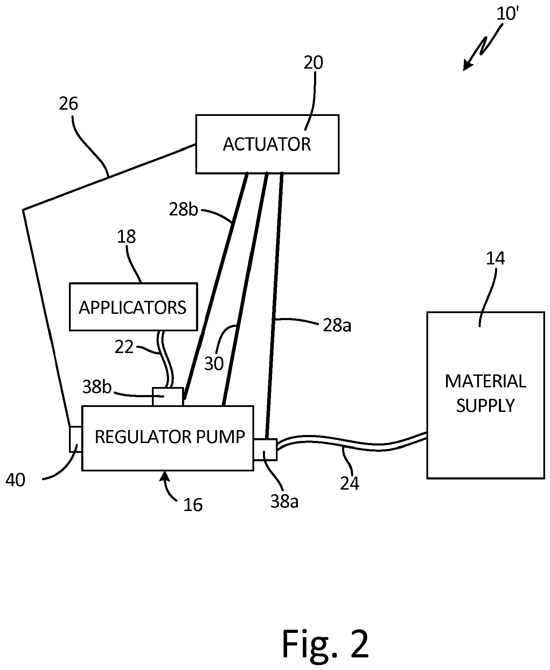

FIG. 2 is a schematic block diagram of flow regulating system 10'. Flow regulating system 10' includes material supply 14, regulator pump 16, applicators 18, and actuator 20. Regulator pump 16 includes inlet valve 38a, outlet valve 38b, and status sensor 40. Inlet valve 38a is disposed on regulator pump 16 and controls a flow of material into regulator pump from material supply 14. Material supply 14 is fluidly connected to regulator pump 16 by high pressure hose 24. Outlet valve 38b is disposed on regulator pump 16 and controls a flow of material downstream out of regulator pump 16. Low pressure hose 22 extends between and fluidly connects outlet valve 38b and applicators 18. Actuator 20 is connected to inlet valve 38a by actuator line 28a and to outlet valve 38b by actuator line 28b. Actuator 20 is connected to regulator pump 16 by pressure line 30. Actuator 20 can receive signals from status sensor 40 via communication link 26, which can be any suitable link for providing signals to actuator 20, such as a wired, wireless, or pneumatic connection, among others.

When regulator pump 16 is ready for a refill cycle, status sensor 40 can generate a fill signal. Status sensor 40 can provide the fill signal to actuator 20 via communication link 26. The fill signal can function as a fill command, thereby causing the actuator 20 to shift outlet valve 38b to a closed position and to shift inlet valve 38a to an open position. For example, actuator 20 can include a three-way solenoid valve responsive to signals from status sensor 40. The fill signal can cause the three-way solenoid to shift positions such that motive fluid, such as compressed air or non-compressible hydraulic fluid, is provided to inlet valve 38a and vented from outlet valve 38b. With outlet valve 38b closed, the downstream pressure is isolated from regulator pump 16 such that any pressure within regulator pump 16 has no effect on the downstream pressure. With inlet valve 38a open, regulator pump 16 is fluidly connected to material source 14, and the upstream pressure within high pressure hose 24 drives the material into regulator pump 16.

Status sensor 40 senses when regulator pump 16 has completed the refill cycle and generates a pump full signal in response thereto. Status sensor 40 can provide the pump full signal to actuator 20 via communication link 26. The pump full signal can function as a dispense command, causing inlet valve 38a to shift to the closed position and outlet valve 38b to shift to the open position. In some examples, actuator 20 can include a three-way solenoid valve responsive to signals from status sensor 40. The pump full signal can cause the three-way solenoid to shift positions such that motive fluid, such as compressed air or non-compressible hydraulic fluid, is provided to outlet valve 38b and vented from inlet valve 38a. With outlet valve 38b open, applicators 18 are fluidly connected to regulator pump 16 such that regulator pump 16 can generate the downstream pressure. With inlet valve 38a closed, regulator pump 16 is fluidly isolated from material source 14, such that the upstream pressure within high pressure hose 24 has no effect on the downstream pressure or the pressure within regulator pump 16.

Further in response to the pump full signal, actuator 20 can provide a working fluid, such as compressed air or a non-compressible hydraulic fluid, to regulator pump 16. The working fluid can create a pressure within regulator pump 16 to drive the material downstream to applicators 18. While actuator 20 is described as providing the working fluid, it is understood that the source of the working fluid can be separate from the source of the motive fluid. With the downstream pressure fully isolated from the upstream pressure, regulator pump 16 creates and maintains the downstream pressure. As such, the downstream pressure is controllable regardless of and independent from the upstream pressure.

Flow controlling system 10' provides significant advantages. Status sensor 40 can provides signals directly to actuator 20 to cause actuator 20 initiate the refill cycle and the dispense cycle. As such, regulator pump 16 can automatically proceed through refill and dispense cycles. Regulator pump 16 fully isolates the downstream pressure within low pressure hose 22 from the upstream pressure within high pressure hose 24 such that the downstream pressure is unaffected by the upstream pressure. Isolating the upstream pressure from the downstream pressure allows the material to be applied from regulator pump 16 at low flow rates, such as about 0.03-0.07 fl. oz/min. (1-2 cc/min.), while being supplied to regulator pump 16 at relatively high flow rates, such as about 0.4 fl.oz/min. (12 cc/min.) or higher. Moreover, where regulator pump 16, including inlet valve 38a and outlet valve 38b, are pneumatically controlled, such as by actuator 20, flow regulating system 10 can be utilized in Class I, Division I, hazardous locations.

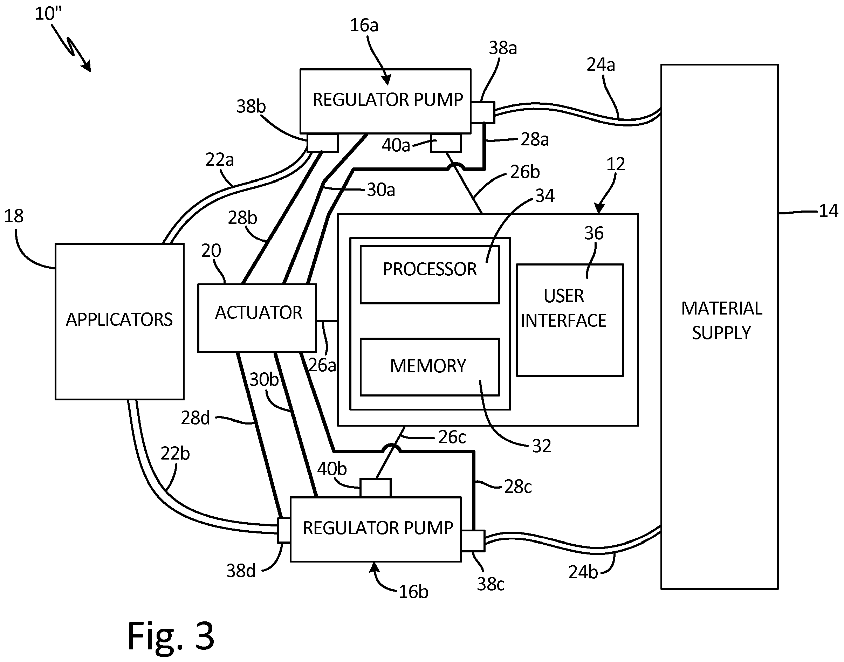

FIG. 3 is a schematic of flow regulating system 10" having multiple regulator pumps 16a and 16b. Flow regulating system 10" includes controller 12, material supply 14, regulator pump 16a, regulator pump 16b, applicators 18, and actuator 20. Controller 12 includes memory 32, processor 34, and user interface 36. Regulator pump 16a includes inlet valve 38a, outlet valve 38b, and status sensor 40a. Regulator pump 16b includes inlet valve 38c, outlet valve 38d, and status sensor 40b.

Inlet valve 38a is disposed on regulator pump 16a and controls a flow of material into regulator pump 16a. Outlet valve 38b is disposed on regulator pump 16a and controls a flow of material out of regulator pump 16a. High pressure hose 24a extends between and connects material supply 14 and inlet valve 38a, and high pressure hose 24a is configured to provide material to regulator pump 16a from material supply 14. Low pressure hose 22a extends between and connects outlet valve 38b and applicators 18, and low pressure hose 22a is configured to provide material to applicators 18 from regulator pump 16a. Status sensor 40a is disposed on regulator pump 16a and is configured to monitor regulator pump 16a. Status sensor 40a is configured to communicate with controller 12 via communication link 26b, which can be a wired or wireless connection.

Inlet valve 38c is disposed on regulator pump 16b and controls a flow of material into regulator pump 16b. Outlet valve 38d is disposed on regulator pump 16b and controls a flow of material out of regulator pump 16b. High pressure hose 24b extends between and connects material supply 14 and inlet valve 38c, and high pressure hose 24b is configured to provide material to regulator pump 16b from material supply 14. Low pressure hose 22b extends between and connects outlet valve 38d and applicators 18, and low pressure hose 22b is configured to provide material to applicators 18 from regulator pump 16b. Status sensor 40b is disposed on regulator pump 16b and is configured to monitor regulator pump 16b. Status sensor 40b is configured to communicate with controller 12 via communication link 26c, which can be a wired or wireless connection.

Material supply 14 drives material through both high pressure hose 24a and high pressure hose 24b. The material can be a single component material or a plural component material. Material supply 14 is configured to drive the material at any pressure and flow rate required to maintain the integrity and desired material properties of the material.

Actuator 20 is connected to inlet valve 38a via actuator line 28a, to outlet valve 38b via actuator line 28b, to inlet valve 38c via actuator line 28c, and to outlet valve 38d via actuator line 28d. Actuator 20 is configured to provide motive fluid, such as air or non-compressible hydraulic fluid, to inlet valves 38a and 38c and to outlet valves 38b and 38d to cause inlet valves 38a and 38c and outlet valves 38b and 38d to shift between a closed position and an open position. For example, actuator 20 can provide the motive fluid to inlet valve 38a to cause inlet valve 38a to shift from the closed position to the open position, and actuator 20 can simultaneously vent motive fluid from outlet valve 38b to cause outlet valve 38b to shift from the open position to the closed position, such that material cannot flow through outlet valve 38b when inlet valve 38a is open. In some examples, actuator 20 can include multiple control valves, with individual control valves dedicated to each regulator pump 16. For example, actuator 20 can include a first three-way solenoid valve connected to inlet valve 38a and outlet valve 38b to control the supply of motive fluid to inlet valve 38a and outlet valve 38b. Actuator 20 can further include a second three-way solenoid valve connected to inlet valve 38c and outlet valve 38d to control the supply of motive fluid to inlet valve 38c and outlet valve 38d. It is understood, however, that actuator 20 controls the opening and closing sequences such that inlet valves 38a and 38c remain closed whenever outlet valves 38b and 38d are open. As such, the downstream fluid pressure in low pressure hoses 22a and 22b remains isolated from and unaffected by the upstream fluid pressure in high pressure hoses 24a and 24b.

Actuator 20 is connected to regulator pump 16a via pressure line 30a and to regulator pump 16b via pressure line 30b. Actuator 20 can provide a working fluid, such as compressed air or a non-compressible hydraulic fluid, to regulator pumps 16a and 16b during a dispense cycle, to cause regulator pumps 16a and 16b to drive material downstream and to generate the downstream pressure.

Controller 12 can control the opening and closing of inlet valves 38a and 38c and outlet valves 38b and 38d. Controller 12 can further control regulator pumps 16a and 16b to control the downstream pressure. Memory 32 stores software that, when executed by processor 34 is configured to control the opening and closing of inlet valves 38a and 38c and outlet valves 38b and 38d. The software stored on memory 32 can be further configured to, when executed by processor 34, control the flow of working fluid to regulator pump 16a and regulator pump 16b to thereby control the downstream pressure in low pressure hose 22a and low pressure hose 22b, respectively. Controller 12 communicates with actuator 20 via communication link 26a, with status sensor 40a via communication link 26b, and with status sensor 40b via communication link 26c.

During operation, one of regulator pump 16a and regulator pump 16b is configured to proceed through a fill cycle while the other of regulator pump 16a and regulator pump 16b proceeds through a dispense cycle. By way of example, a flow control cycle where outlet valve 38b of regulator pump 16a is initially open, such that regulator pump 16a is providing material to applicators 18, and outlet valve 38d of regulator pump 16b is initially closed, such that regulator pump 16b is disconnected from applicators 18, is described below.

Regulator pump 16a drives the material downstream to applicators 18 until status sensor 40a senses when the volume of material in regulator pump 16a has reached a refill level, such that regulator pump 16a and is ready to be refilled. Status sensor 40a generates a first fill signal based on the volume of material within regulator pump 16a reaching the refill level. Status sensor 40a provides the first fill signal to controller 12 via communication link 26b. In response to the first fill signal, controller 12 generates a first dispense command, to cause regulator pump 16b to enter the dispense cycle, and a first fill command, to cause regulator pump 16a to enter the refill cycle. Controller 12 can communicate the first fill command and the first dispense command to actuator 20.

In response to the first dispense command, actuator 20 causes outlet valve 38d to shift to the open position and causes inlet valve 38c to shift to the open position. In one example, actuator 20 provides motive fluid, such as air or a non-compressible hydraulic fluid, to outlet valve 38d via actuator line 28d to cause outlet valve 38d to shift to the open position. Simultaneously, actuator 20 can vent motive fluid from inlet valve 38c via actuator line 28c such that inlet valve 38c shifts to the closed positon. With inlet valve 38c closed, the material within regulator pump 16b is isolated from the upstream fluid pressure in high pressure hose 24b. With outlet valve 38d open, the material within regulator pump 16b is connected to applicators 18 via low pressure hose 22b.

Actuator 20 is further configured to provide working fluid to regulator pump 16b in response to the first dispense signal. Actuator 20 provides the working fluid at a pressure required to drive the material out of regulator pump 16b at the desired downstream pressure and flow rate. The working fluid drives a fluid displacement member within regulator pump 16b through a pressure stroke, and the fluid displacement member drives the material out of regulator pump 16b. Regulator pump 16b continues through the dispense cycle until status sensor 40b senses that a volume of material in regulator pump 16b reaches a refill level and generates a second fill signal.

As regulator pump 16b enters the dispense cycle, regulator pump 16a simultaneously enters the refill cycle. By causing one of regulator pump 16a and 16b to enter the dispense cycle when the other of regulator pump 16a and 16b enters the refill cycle, flow regulating system 10 ensures a continuous supply of material is available to applicators 18.

In response to the first fill command, actuator 20 causes outlet valve 38b to close and causes inlet valve 38a to open. In one example, actuator 20 vents motive fluid from outlet valve 38b via actuator line 28b to cause outlet valve 38b to shift to the closed position, and actuator 20 provides motive fluid to inlet valve 38a via actuator line 28a to cause inlet valve 38a to shift to the open positon. With outlet valve 38b closed, low pressure hose 22a is isolated from regulator pump 16a such that any internal pressure within regulator pump 16a has no effect on the downstream pressure. With inlet valve 38a in the open position, the upstream fluid pressure generated by material supply 14 drives the fluid within high pressure hose 24a into regulator pump 16a through inlet valve 38a.

Regulator pump 16a fills with material from high pressure hose 24a. Status sensor 40 can sense when the volume of material in regulator pump 16 has reached the maximum volume, and status sensor 40 can generate a first pump full signal in response thereto. In some examples, inlet valve 38a can shift to the closed position in response to the pump full signal. For example, controller 12 can generate a first pump full command based on the first pump full signal and can provide the first pump full command to actuator 20 via communication link 26a. Based on the first pump full signal, actuator 20 can cause inlet valve 38a to shift to the closed position, thereby isolating the material in regulator pump 16 from the upstream pressure. In other examples, inlet valve 38a can remain in the open position until controller 12 generates a second dispense command, such as in response to a second fill signal generated by status sensor 40b. The first pump full signal indicates that regulator pump 16a has completed the refill cycle and is primed for a dispense cycle.

Regulator pump 16b continues through the dispense cycle and provides material to applicators 18. When status sensor 40b senses that the volume of material in regulator pump 16b reaches the refill volume, status sensor 40b generates the second fill signal and provides the second fill signal to controller 12 via communication link 26c. In response to the second fill signal, controller 12 generates the second dispense command and a second fill command. Controller 12 can communicate the second dispense command and the second fill command to actuator 20. It is understood, however, that controller 12 can communicate directly with regulator pump 16b and with regulator pump 16a to control the opening and closing of inlet valves 38a and 38c and outlet valves 38b and 38d.

Based on the second dispense command, regulator pump 16a enters the dispense cycle. Actuator 20 can cause outlet valve 38b to shift to an open position and can cause inlet valve 38a to shift to a closed position. Closing inlet valve 38a isolates the material within regulator pump 16 from the upstream pressure. Actuator 20 can also provide working fluid to regulator pump 16a via pressure line 30a to drive the material downstream out of regulator pump 16a. It is understood that outlet valve 38b opens only when inlet valve 38a is closed, thereby ensuring that the downstream pressure is independent of and unaffected by the upstream pressure. Regulator pump 16a is thus fluidly connected to applicators 18 and can generate and provide the downstream pressure.

Based on the second fill command, regulator pump 16b enters the refill cycle. Actuator 20 causes outlet valve 38d to shift to the closed position, and causes inlet valve 38c to shift to the open position. With outlet valve 38d closed, regulator pump 16b is fluidly disconnected from applicators 18 such that any change in the pressure within regulator pump 16b has no effect on the downstream pressure in low pressure hose 22b and/or at applicators 18. With inlet valve 38c open, the upstream fluid pressure within high pressure hose 24b drives the material into regulator pump 16b through inlet valve 38c. Regulator pump 16b fills with the material and status sensor 40b can generate a second pump full signal in response to sensing the volume of material within regulator pump 16b reaching a maximum volume. The second pump full signal indicates that regulator pump 16b has completed the refill cycle and is primed for another dispense cycle.

Regulator pump 16a continues to provide material to applicators 18 at the desired downstream pressure until regulator pump 16a requires refill. Regulator pump 16a is connected to applicators 18 when regulator pump 16b becomes empty, and regulator pump 16b is connected to applicators 18 when regulator pump 16a becomes empty. As regulator pump 16a proceeds through the dispense cycle, regulator pump 16b proceeds through the refill cycle. As regulator pump 16b proceeds through the dispense cycle, regulator pump 16a proceeds through the refill cycle. As such, the material is continuously supplied to applicators 18 by at least one of regulator pump 16a and regulator pump 16b, while the other of regulator pump 16a and regulator pump 16b is refilled, thereby ensuring a continuous flow of material to applicators 18.

Flow regulating system 10" provides significant advantages. Outlet valves 38b and 38d are configured to open only when inlet valves 38a and 38c, respectively, are closed, thereby isolating the downstream fluid pressure from the upstream fluid pressure. As such, the downstream fluid pressure is unaffected by the upstream fluid pressure. Regulator pumps 16a and 16b are controlled to generate the desired downstream fluid pressure. By isolating the downstream fluid pressure from the upstream fluid pressure, material supply 14 can provide the material through high pressure hoses 24a and 24b at any pressure and/or flow rate required to maintain the material properties and the desired mix ratio, where the material is a plural component material. Regulator pumps 16a and 16b individually drive the material downstream and generate the downstream fluid pressure. As such, the material can be provided at any desired downstream pressure, independent of the upstream pressure. Flow regulating system 10' enables material supply 14 to provide material at high flow rates and mix ratios, while the material is provided to applicators 18 at relatively low flow rates and pressures. In addition, controlling regulator pumps 16a and 16b such that one of regulator pumps 16a and 16b dispenses the material while the other of regulator pumps 16a and 16b refills with the material ensures that a continuous supply of the material is provided to applicators 18, thereby providing for more efficient and cost-effective material application.

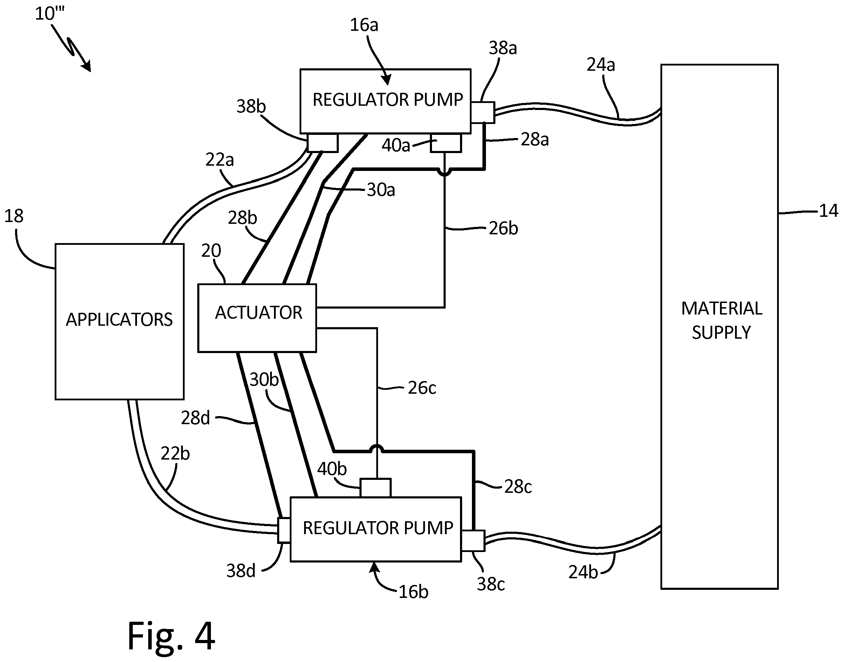

FIG. 4 is a schematic block diagram of flow regulating system 10'''. Flow regulating system 10''' includes material supply 14, regulator pump 16a, regulator pump 16b, applicators 18, and actuator 20. Regulator pump 16a includes inlet valve 38a, outlet valve 38b, and status sensor 40a. Regulator pump 16b includes inlet valve 38c, outlet valve 38d, and status sensor 40b.

Inlet valve 38a is disposed on regulator pump 16a and controls a flow of material into regulator pump 16a. Outlet valve 38b is disposed on regulator pump 16a and controls a flow of material out of regulator pump 16a. High pressure hose 24a extends between and connects material supply 14 and inlet valve 38a. Low pressure hose 22a extends between and connects outlet valve 38b and applicators 18. Status sensor 40a is disposed on regulator pump 16a and is configured to monitor regulator pump 16a. Status sensor 40a is configured to communicate with actuator 20 via communication link 26b.

Inlet valve 38c is disposed on regulator pump 16b and controls a flow of material into regulator pump 16b. Outlet valve 38d is disposed on regulator pump 16b and controls a flow of material out of regulator pump 16b. High pressure hose 24b extends between and connects material supply 14 and inlet valve 38c. Low pressure hose 22b extends between and connects outlet valve 38d and applicators 18. Status sensor 40b is disposed on regulator pump 16b and is configured to monitor regulator pump 16b. Status sensor 40b is configured to communicate with actuator 20 via communication link 26c, which can be any suitable link for providing signals to actuator 20, such as a wired, wireless, or pneumatic connection, among others.

Actuator 20 is connected to inlet valve 38a via actuator line 28a, to outlet valve 38b via actuator line 28b, to inlet valve 38c via actuator line 28c, and to outlet valve 38d via actuator line 28d. Actuator 20 is configured to provide motive fluid, such as air or non-compressible hydraulic fluid, to inlet valves 38a and 38c and to outlet valves 38b and 38d to cause inlet valves 38a and 38c and outlet valves 38b and 38d to shift between a closed position and an open position. Actuator 20 is connected to regulator pump 16a via pressure line 30a and to regulator pump 16b via pressure line 30b.

During operation, one of regulator pump 16a and regulator pump 16b is configured to proceed through a fill cycle while the other of regulator pump 16a and regulator pump 16b proceeds through a dispense cycle. Status sensor 40a senses when regulator pump 16a has reached a refill level and generates a first fill signal in response thereto. Status sensor 40a provides the first fill signal to actuator 20 via communication link 26b, which can be any suitable link for providing signals to actuator 20, such as a wired, wireless, or pneumatic connection, among others. The first fill signal can function as a first fill command and as a first dispense command. As such, in response to the first fill signal, actuator 20 shifts outlet valve 38b to a closed position and shifts inlet valve 38a to an open position. With outlet valve 38b in the closed position, the material in regulator pump 16a is isolated from low pressure hose 22a and applicators 18. With inlet valve 38a in the open position, regulator pump 16a fills with material from high pressure hose 24a. Further in response to the first fill signal, actuator 20 shifts inlet valve 38c to the closed position and shifts outlet valve 38d to the open position. With inlet valve 38c closed, the material within regulator pump 16b is isolated from the upstream fluid pressure in high pressure hose 24b. With outlet valve 38d open, the material within regulator pump 16b is connected to applicators 18 via low pressure hose 22b. For example, actuator 20 can include valving configured to simultaneously open inlet valve 38a and outlet valve 38d, and to simultaneously close inlet valve 38c and outlet valve 38b, such that at least one of regulator pump 16a and regulator pump 16b is connected to applicators 18.

Actuator 20 also provides working fluid to regulator pump 16b at a pressure required to drive the material out of regulator pump 16b at the desired downstream pressure and flow rate. The working fluid drives a fluid displacement member within regulator pump 16b through a pressure stroke, and the fluid displacement member drives the material out of regulator pump 16b. Regulator pump 16b continues through the dispense cycle until status sensor 40b senses that a volume of material in regulator pump 16b reaches a refill level and generates a second fill signal.

The second fill signal can function as both a second fill command and a second dispense command. As such, based on the second fill signal, actuator 20 can cause outlet valve 38b to shift to the open position, inlet valve 38a to shift to the closed position, outlet valve 38d to shift to the closed position, and inlet valve 38c to shift to the open position. Regulator pump 16a is thus fluidly connected to applicators 18, and can proceed through the dispense cycle, and regulator pump 16b is fluidly connected to material supply 14 and can proceed through the refill cycle.

Actuator 20 can also provide working fluid to regulator pump 16a at a pressure required to drive the material out of regulator pump 16a at the desired downstream pressure and flow rate. The working fluid drives a fluid displacement member within regulator pump 16a through a pressure stroke, and the fluid displacement member drives the material out of regulator pump 16a. Regulator pump 16a continues through the dispense cycle until status sensor 40a senses that a volume of material in regulator pump 16a reaches a refill level and generates the first fill signal.

Flow regulating system 10'" provides significant advantages. Status sensors 40a and 40b can provides signals directly to actuator 20 to cause actuator 20 initiate the refill cycles and the dispense cycles. As such, regulator pumps 16a and 16b can automatically proceed through refill and dispense cycles. Regulator pumps 16a and 16b fully isolate the downstream pressure within low pressure hoses 22a and 22b from the upstream pressure within high pressure hoses 24a and 24b such that the downstream pressure is unaffected by the upstream pressure. Isolating the upstream pressure from the downstream pressure allows the material to be applied from regulator pumps 16a and 16b at low flow rates, such as about 0.03-0.07 fl. oz/min. (1-2 cc/min.), while being supplied to regulator pumps 16a and 16b at relatively high flow rates, such as about 0.4 fl.oz/min. (12 cc/min.) or higher. Moreover, where regulator pumps 16a and 16b, including inlet valves 38a and 38c and outlet valves 38b and 38d, are pneumatically controlled, such as by actuator 20, flow regulating system 10 can be utilized in Class I, Division I, hazardous locations. Moreover, regulator pump 16a is connected to applicators 18 when regulator pump 16b becomes empty, and regulator pump 16b is connected to applicators 18 when regulator pump 16a becomes empty. As regulator pump 16a proceeds through the dispense cycle, regulator pump 16b proceeds through the refill cycle. As regulator pump 16b proceeds through the dispense cycle, regulator pump 16a proceeds through the refill cycle. As such, the material is continuously supplied to applicators 18 by at least one of regulator pump 16a and regulator pump 16b, while the other of regulator pump 16a and regulator pump 16b is refilled, thereby ensuring a continuous flow of material to applicators 18.

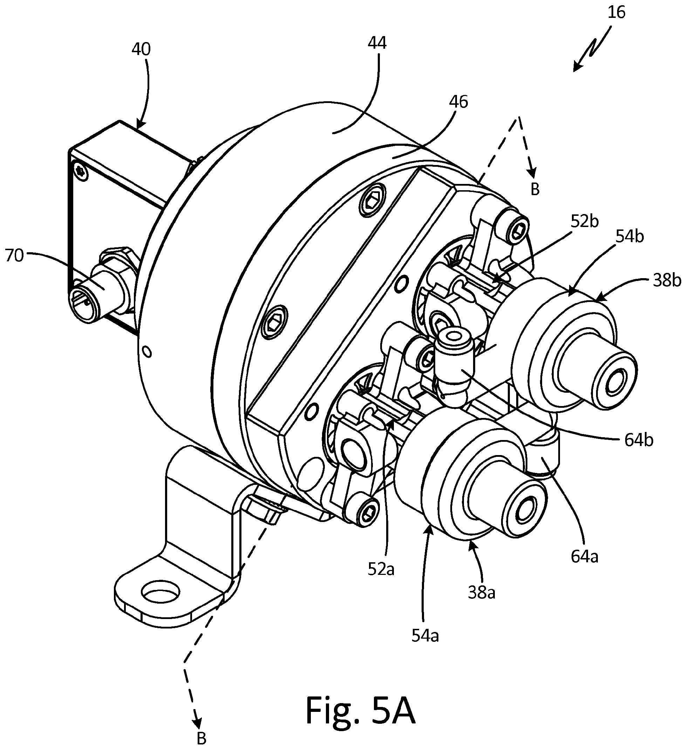

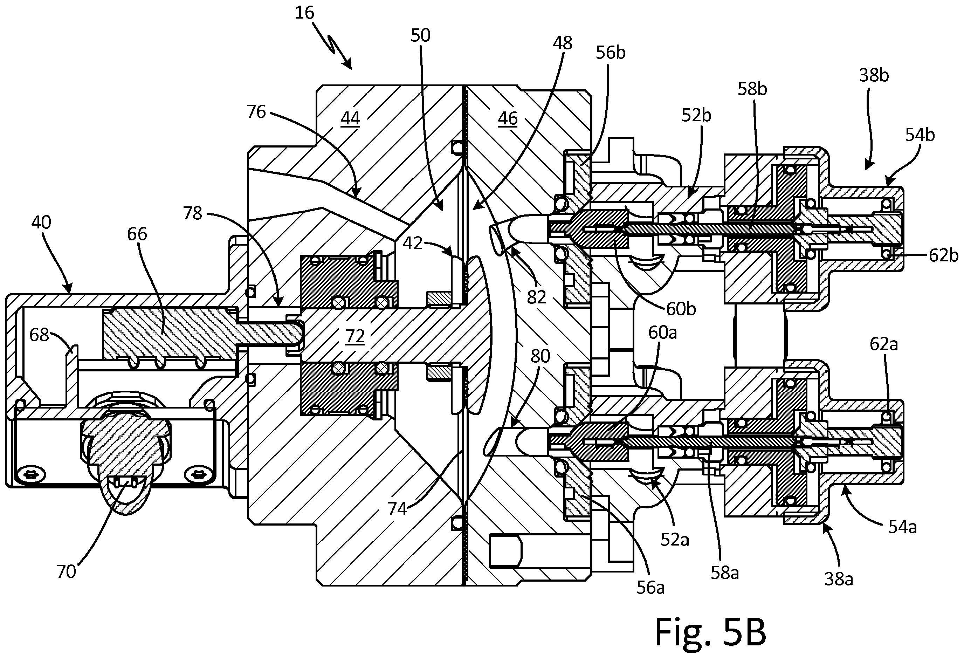

FIG.5 is an isometric view of regulator pump 16. FIG. 5B is a cross-sectional view of regulator pump 16 taken along line B-B in FIG. 5A. FIGS. 5A-5B will be discussed together. Regulator pump 16 includes inlet valve 38a, outlet valve 38b, status sensor 40, fluid displacement member 42, body 44, cover plate 46, material chamber 48, and working fluid chamber 50. Inlet valve 38a includes wet portion 52a, dry portion 54a, seat 56a, stem 58a, sealing member 60a, spring 62a, and connector 64a. Outlet valve 38b similarly includes wet portion 52b, dry portion 54b, seat 56b, stem 58b, sealing member 60b, spring 62b, and connector 64b. Status sensor 40 includes slide 66, stop 68, and port 70. Fluid displacement member 42 includes shaft 72 and diaphragm 74. Body 44 includes working fluid inlet 76 and shaft bore 78. Cover plate 46 includes material inlet 80 and material outlet 82.

Cover plate 46 is attached to body 44, and diaphragm 74 is disposed between cover plate 46 and body 44. Material chamber 48 is disposed between and defined by cover plate 46 and diaphragm 74. Working fluid chamber 50 is disposed between and defined by body 44 and diaphragm 74. Working fluid inlet 76 extends through body 44 and is connected to working fluid chamber 50. Pressure line 30 is connected to working fluid inlet 76. Working fluid inlet 76 is configured to receive a working fluid, such as air or a non-compressible hydraulic fluid, through pressure line 30 from a fluid source, such as actuator 20 (shown in FIGS. 1-2), to drive fluid displacement member 42 in a forward direction towards cover plate 46.

Shaft 72 is attached to and follows diaphragm 74, and shaft 72 extends through shaft bore 78 in body 44. Status sensor 40 is attached to body 44 opposite working fluid chamber 50. Slide 66 is disposed in status sensor 40 and abuts a distal end of shaft 72. Stop 68 delimits an extent of travel for slide 66. Port 70 is configured to receive a communication link, such as communication link 26 (FIGS. 1-2), to provide information to controller 12 (shown in FIGS. 1 and 3) and or actuator 20 (shown in FIGS. 1-4) regarding the volume of material in material chamber 48. Status sensor 40 is configured to provide information regarding the linear displacement of slide 66, which corresponds to the displacement of fluid displacement member 42, due to the connection of shaft 72 and slide 66, and thus to the volume of material in material chamber 48. As such, status sensor 40 can be a linear transducer. It is understood, however, that status sensor 40 can be any suitable transducer for sensing the position of fluid displacement member 42.

Inlet valve 38a is attached to cover plate 46 at material inlet 80. Seat 56a is disposed between wet portion 52a and cover plate 46a. Stem 58a extends from wet portion 52a and into dry portion 54a. Sealing member 60a is attached to stem 58a in wet portion 52a and is disposed adjacent seat 56a. Sealing member 60a is configured to engage with seat 56a when inlet valve 38a is in a closed position and is configured to be displaced from seat 56a, creating an inlet flow path, when inlet valve 38a is in an open position. Connector 64a extends from dry portion 54a and is configured to be connected to an actuator line, such as actuator line 28a (best seen in FIG. 1). Connector 64a receives motive fluid, such as air or a non-compressible hydraulic fluid, and provides the motive fluid to and vents the motive fluid from dry portion 54a to drive stem 58a and sealing member 60a between the closed position and the open position. Spring 62a is disposed in dry portion 54a and is configured to drive stem 58a and sealing member 60a to the closed position when a supply of motive fluid is removed from dry portion 54a. While inlet valve 38a is shown as a needle valve, it is understood that inlet valve 38a can be any desired valve capable of being controlled between the open position and the closed position.

Outlet valve 38b is attached to cover plate 46 at material outlet 82. Seat 56b is disposed between wet portion 52b and cover plate 46b. Stem 58b extends from wet portion 52b and into dry portion 54b, and sealing member 60b is attached to stem 58b and disposed adjacent seat 56b. Sealing member 60b is configured to engage with seat 56b when outlet valve 38b is in a closed position and is configured to be displaced from seat 56b when outlet valve 38b is in an open position. Connector 64b extends from dry portion 54b and is configured to be connected to an actuator line, such as actuator line 28b (best seen in FIG. 1). Connector 64b can provide motive fluid to dry portion 54b to drive stem 58b and sealing member 60b to the open position. Spring 62b is disposed in dry portion 54b and can drive stem 58b and sealing member 60b to the closed position when the motive fluid is vented from dry portion 54b. While outlet valve 38b is shown as a needle valve, it is understood that inlet valve 38a can be any desired valve capable of being specifically controlled between the open position and the closed position.

In some examples, outlet valve 38b is identical to inlet valve 38a, except outlet valve 38b is connected to material outlet 82, such that wet portion 52b receives material from material chamber 48, and inlet valve 38a is connected to material inlet 80, such that wet portion 52a provides material to material chamber 48. While outlet valve 38b and inlet valve 38a can be identical, thereby facilitating easy replacement of parts while requiring fewer unique parts, it is understood that each of inlet valve 38a and outlet valve 38b can be of any desired configuration and can be identical or unique.

During a refill cycle, motive fluid can be provided to dry portion 54a of inlet valve 38a, thereby causing stem 58a and sealing member 60a to shift away from seat 56a. Motive fluid can be vented from dry portion 54b of outlet valve 38b and outlet valve 38b shifts to the closed positon. Outlet valve 38b remains closed when inlet valve 38a is open. The motive fluid shifts stem 58a causing sealing member 60a to disengage from seat 56a, thereby creating the inlet flowpath between sealing member 60a and seat 56a. An upstream pressure generated by a material supply, such as material supply 14 (shown in FIGS. 1-4), causes material to flow into material chamber 48 through inlet valve 38a and material inlet 80. The material flowing into material chamber 48 causes fluid displacement member 42 to shift rearward as material chamber 48 expands, thereby driving shaft 72 rearward due to the connection of shaft 72 and diaphragm. Shaft 72 simultaneously drives slide 66 rearward. Shaft 72 and slide 66 continue to shift until slide 66 abuts stop 68, which delimits an extent of travel for slide 66 in the rearward direction. Status sensor 40 can be configured to generate the pump full signal in response to slide 66 abutting stop 68. Status sensor 40 can provide the pump full signal to the controller to indicate the regulator pump 16 has completed the refill cycle and is primed to for a dispense cycle. Regulator pump 16 can remain in the primed state until a dispense command is received.

Based on the dispense command, regulator pump 16 can enter a dispense cycle. Inlet valve 38a shifts to the closed position and the outlet valve 38b shifts to the open position. For example, the actuator can provide a supply of motive fluid to dry portion 54b of outlet valve 38b, causing stem 58b and sealing member 60b to shift to an open position. In the open position sealing member 60b is displaced from seat 56b such that material can flow out of material chamber 48 between sealing member 60b and seat 56b. The actuator can also vent motive fluid from dry portion 54a of inlet valve 38a, and spring 62a can thus drive stem 58a and sealing member 60a to the closed position. With inlet valve 38a closed, the internal pressure in material chamber 48 and the downstream pressure are isolated from the upstream pressure.

To generate a desired downstream pressure working fluid is provided to working fluid chamber 50 through working fluid inlet 76. Pressure line 30 receives working fluid from a working fluid source, such as actuator 20 (shown in FIGS. 1-4), and provides the working fluid to working fluid chamber 50. The working fluid drives fluid displacement member 42 in the forward direction through material chamber 48. The pressure of the working fluid in working fluid chamber 50 is directly related to the material pressure in material chamber 48 and thus to the downstream pressure. As such, the downstream pressure is generated by regulator pump 16 and can be controlled by controlling the working fluid pressure. In the example shown, the working fluid pressure and the downstream pressure have a 1:1 pressure ratio. For example, where the desired downstream fluid pressure is 1034KPa (148psi), the working fluid within pressure chamber will be provided at and maintained at 1034KPa (148psi).

The working fluid drives fluid displacement member 42 in the forward direction. Diaphragm 74 pulls shaft 72 through shaft bore 78 due to the connection of shaft 72 and diaphragm 74. Shaft 72 simultaneously pulls slide 66 in the forward direction due to the connection of shaft 72 and slide 66. Status sensor 40 transmits positional information related to fluid displacement member 42 based on the position of slide 66. When slide reaches a forward extent of travel, indicating that the volume of material in material chamber 48 has reached the refill volume, status sensor 40 can generate the fill signal and transmit the fill signal to controller 12. While status sensor 40 is described as generating the fill signal when slide 66 reaches the forward extent of travel, it is understood that status sensor 40 can continuously provide positional information to the controller such that the controller provides the fill command based on slide 66 reaching any desired position. For example, the controller can generate the fill command based on slide 66 being at a position indicating that material chamber 48 is 50% empty. The fill signal indicates that regulator pump 16 has is ready to proceed through another refill cycle.

Regulator pump 16 provides significant advantages. Outlet valve 38b of regulator pump 16 is configured to be in the closed position whenever inlet valve 38a of regulator pump is in the open position. As such, the upstream fluid pressure has no effect on the downstream fluid pressure downstream of outlet valve. By isolating the downstream fluid pressure from the upstream fluid pressure, the downstream fluid pressure can be specifically controlled to provide whatever pressure or flow rate is desired. Isolating the downstream fluid pressure from the upstream fluid pressure allows for high flow rates and pressures upstream of regulator pump 16, which can ensure that the material has desired properties, while providing low flow rates and pressures downstream of regulator pump 16 where the material is applied.

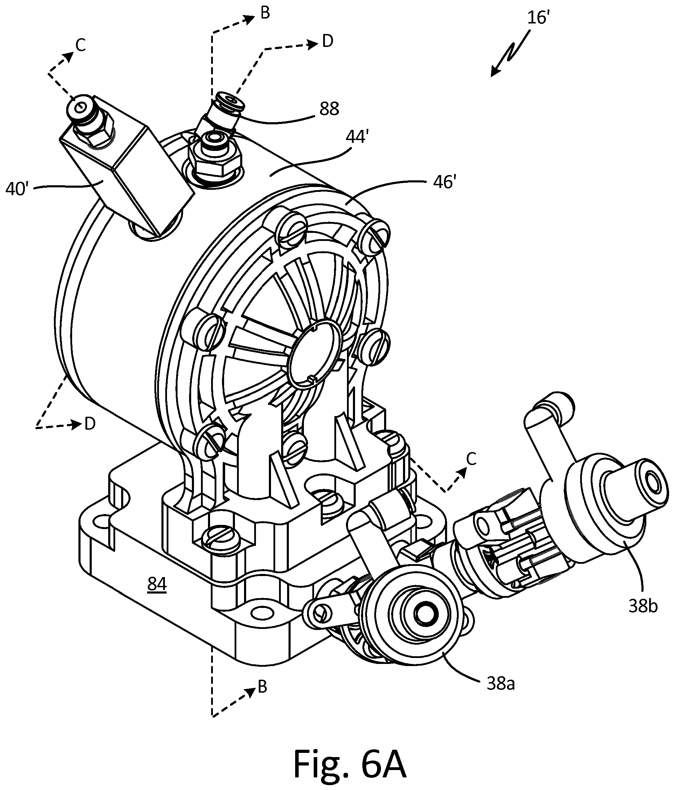

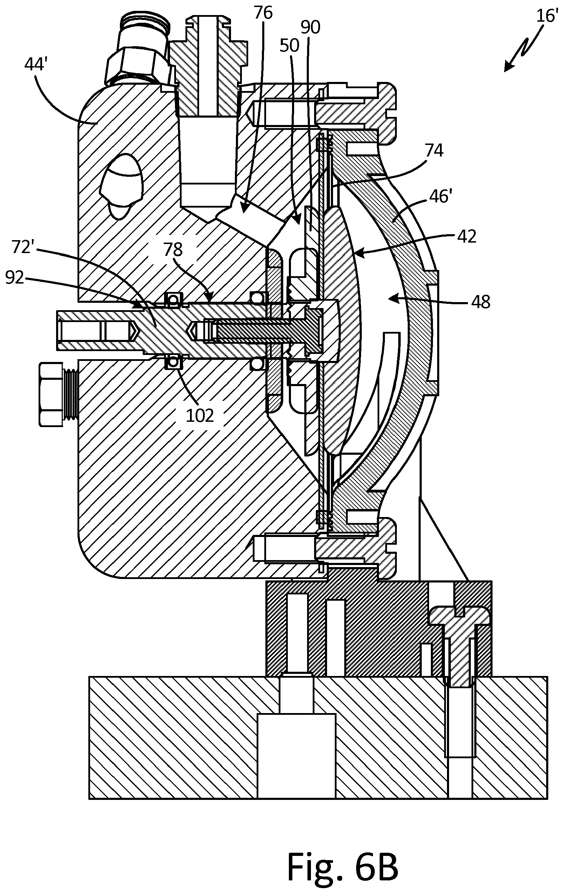

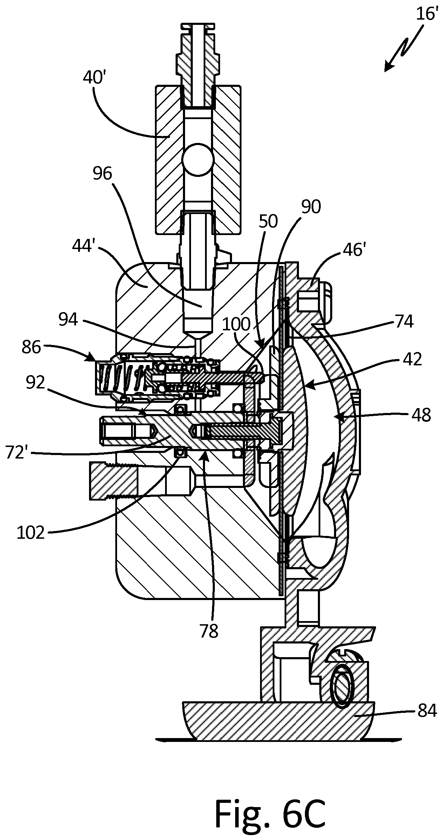

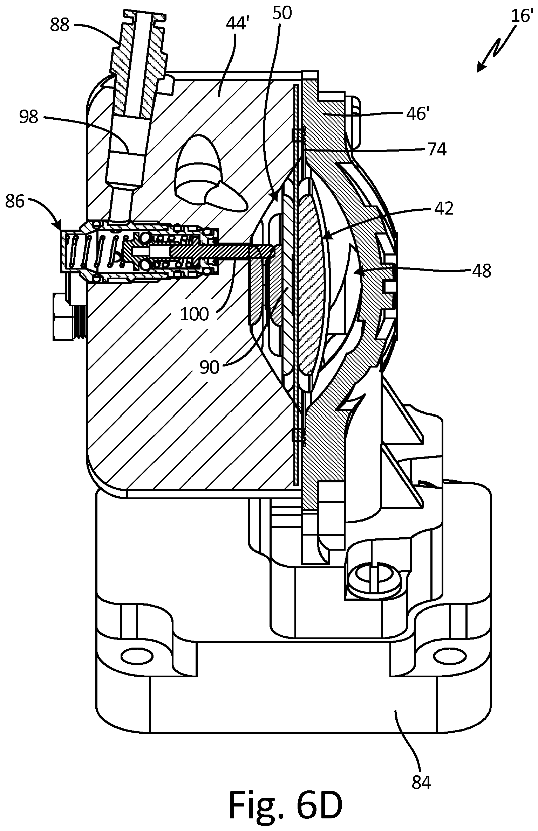

FIG. 6A is an isometric view of regulator pump 16'. FIG. 6B is a cross-sectional view of regulator pump 16' taken along line B-B in FIG. 6A. FIG. 6C is a cross-sectional view of regulator pump 16' taken along line C-C in FIG. 6A. FIG. 6D is a cross-sectional view of regulator pump 16' taken along line D-D in FIG. 6A. FIGS. 6A-6D will be discussed together. Regulator pump 16' includes inlet valve 38a, outlet valve 38b, status sensor 40', fluid displacement member 42, body 44', cover plate 46', material chamber 48, working fluid chamber 50, base 84, pilot valve 86, and pressure source 88. Fluid displacement member 42 includes shaft 72', diaphragm 74, and diaphragm plate 90. Shaft 72' includes step 92. Body 44' includes working fluid inlet 76, shaft bore 78, signal passage 94, status sensor port 96, and pressure port 98.

Cover plate 46' and body 44' are disposed on base 84. Cover plate 46' is attached to body 44' with diaphragm 74 disposed between and secured between cover plate 46' and body 44'. Shaft 72' is attached to and follows diaphragm 74, and shaft 72' extends rearward from diaphragm 74 through shaft bore 78. Diaphragm plate 90 is attached to diaphragm 74 and configured to contact and drive pin 100 of pilot valve 86. O-ring 102 is disposed in shaft bore 78 and provides a seal around shaft 72'. Material chamber 48 is disposed between and defined by cover plate 46' and diaphragm 74. Working fluid chamber 50 is disposed between and defined by body 44' and diaphragm 74. Working fluid inlet 76 extends through body and is connected to working fluid chamber 50. Working fluid inlet 76 is configured to receive a working fluid, such as air or a non-compressible hydraulic fluid, through pressure line 30 and to provide the working fluid to working fluid chamber 50. The working fluid is configured to pressurize working fluid chamber 50 and to drive fluid displacement member 42 through a pressure stroke, during which fluid displacement member 42 is driven towards cover plate 46' to drives material out of material chamber 48 through outlet valve 38b. Inlet valve 38a is attached to base 84, and outlet valve 38b is similarly attached to base 84. Inlet valve 38a is fluidly connected to material chamber 48 by a material passage (not shown) extending through base 84, and outlet valve 38b is similarly connected to material chamber 48 by a material passage (not shown) extending through base 84. Inlet valve 38a and outlet valve 38b can be of any suitable configuration for controlling the flow of material through regulator pump 16 such that the downstream pressure is isolated form and independent of the upstream pressure.

Status sensor port 96 extends into body 44' and receives status sensor 40'. Status sensor 40' is configured to communicate a status of regulator pump 16, such as whether regulator pump 16 requires a refill or is ready to dispense material, to a controller, such as controller 12 (shown in FIGS. 1 and 3), and/or an actuator, such as actuator 20 (shown in FIGS. 1-4). Signal passage 94 extends from status sensor port 96 and to shaft bore 78. Pilot valve 86 is disposed in body 44' between status sensor port 96 and shaft bore 78, such that signal passage 94 can receive fluid, such as air, through pilot valve 86. Pin 100 of pilot valve 86 extends through body 44' and into working fluid chamber 50. Pressure source 88 is disposed in pressure port 98 and is configured to provide pressurized fluid, such as compressed air, to pilot valve 86. Pressure source 88 is configured to continuously supply pressurized fluid through pressure port 98. When pilot valve 86 is in a rearward, open position, the pressurized fluid flows through pilot valve 86 and into signal passage 94. When pilot valve is in a forward, closed position, the pressurized fluid is prevented from flowing through pilot valve 86, such that the pressurized fluid cannot flow to signal passage 94.

During operation, fluid displacement member 42 is alternatively driven in a forward direction towards cover plate to displace material from material chamber 48 and in a rearward direction away from cover plate by the material as the material flows into material chamber 48 through inlet valve 38a. By way of example, a refill cycle and a dispense cycle are discussed below.

The controller and/or the actuator can receive a fill signal from status sensor 40' and generate a fill command. Based on the fill command, outlet valve 38b shifts to the closed position, preventing material from flowing downstream out of material chamber 48, and inlet valve 38a shifts to the open position, allowing material to flow into material chamber 48 through inlet valve 38a. With inlet valve 38a in the open position, the upstream fluid pressure generated by a material supply, such as material supply 14 (shown in FIGS. 1-4), drives the material into material chamber 48. The material flowing into material chamber 48 drives fluid displacement member 42 in the rearward direction.

Fluid displacement member 42 continues in the rearward direction and diaphragm plate 90 contacts pin 100 of pilot valve 86. As fluid displacement member 42 is driven in the rearward direction, step 92 passes o-ring 102 such that o-ring 102 seals against shaft 72. With o-ring 102 contacting shaft 72', shaft bore 78 is sealed such that signal passage 94 cannot vent through shaft bore 78. Diaphragm plate 90 drives pin 100 causing the internal components of pilot valve 86 to shift rearward, thereby causing pilot valve 86 to shift to the open position. With pilot valve 86 open, the pressurized fluid provided by pressure source 88 can flow through pilot valve to signal passage 94. The pressure within signal passage 94 suddenly rises when pilot valve 86 shifts to the open position. Status sensor 40' senses the sudden rise in pressure in signal passage 94 and is configured to generate a pump full signal in response to the sudden rise in pressure and to provide the pump full signal to the controller and/or the actuator. While status sensor 40' is described as a pressure transducer, it is understood that any suitable sensor can be utilized. The pump full signal indicates that regulator pump 16 has completed the refill cycle and is primed for the dispense cycle.

When a dispense command is generated, outlet valve 38b shifts to the open position and inlet valve 38a shifts to the closed position based on the dispense command. Material chamber 48 is thus isolated from the upstream pressure and fluidly connected to the downstream pressure. With outlet valve 38b open, working fluid is provided to working fluid chamber 50, for example by a working fluid source, such as the actuator, to drive fluid displacement member 42 in the forward direction. In some examples, the pressure in working fluid chamber 50 and the downstream pressure generated by fluid displacement member 42 have a 1:1 pressure ratio. As such, the downstream pressure can be controlled by setting the working fluid pressure at the desired downstream pressure.

During the dispense cycle, diaphragm 74 pulls shaft 72' in the forward direction as the working fluid drives fluid displacement member 42 in the forward direction. When step 92 of shaft 72' is pulled beyond o-ring 102, signal passage 94 is unsealed and can vent the pressurized fluid through shaft bore 78. Step 92 can be disposed at any desired position on shaft 72' to control when signal passage 94 vents through shaft bore 78. For example, step 92 can be positioned on shaft 72' such that signal passage 94 vents when material chamber 48 is empty. In other examples, step 92 can be positioned to vent signal passage 94 after any desired volume and/or percentage of material has been displaced from material chamber 48.

Venting signal passage 94 causes the pressure within signal passage 94 to drop to the ambient. The drop in pressure causes pilot valve 86 to shift to the closed position such that the pressurized fluid provided through pressure port 98 cannot flow to signal passage 94. Status sensor 40' senses the drop of pressure within signal passage 94 and generates a fill signal in response to the drop in pressure. The fill signal indicates that regulator pump 16' has completed the dispense cycle and is ready to proceed through another refill cycle.

Regulator pump 16'provides significant advantages. Regulator pump 16' generates the fill signal and the pump full signal in a pneumatic-mechanical manner. Regulator pump 16 is thus suitable for use in Class I, Division I hazardous locations. Regulator pump 16' is a self-contained unit that generates the downstream fluid pressure. Regulator pump 16' also fully isolates the downstream fluid pressure from the upstream fluid pressure such that the downstream fluid pressure remains independent from and unaffected by the upstream fluid pressure. As such, regulator pump 16' can provide materials downstream flow rates and pressures well below the minimum flow rates and pressures required at the material supply. Regulator pump 16' thus allows for more and varied materials to be applied at low flow rates and pressures. Inlet valve 38a and outlet valve 38b can be identical parts, saving costs and maintenance overhead by reducing the amount of part numbers.

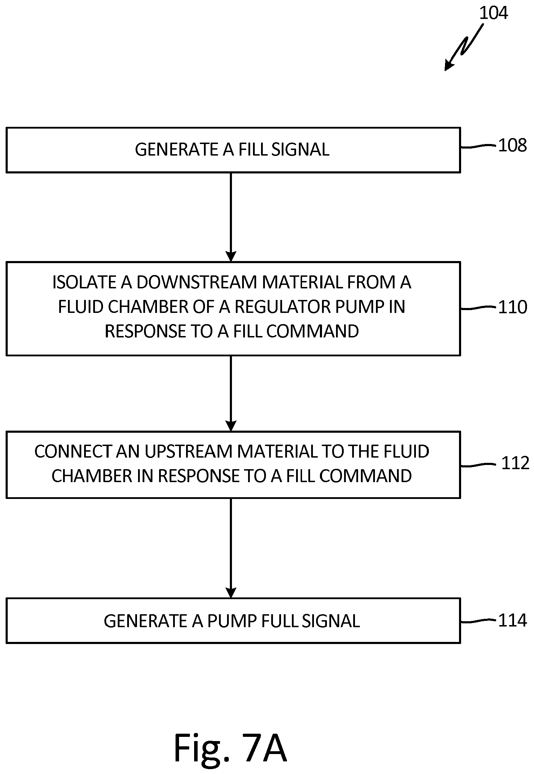

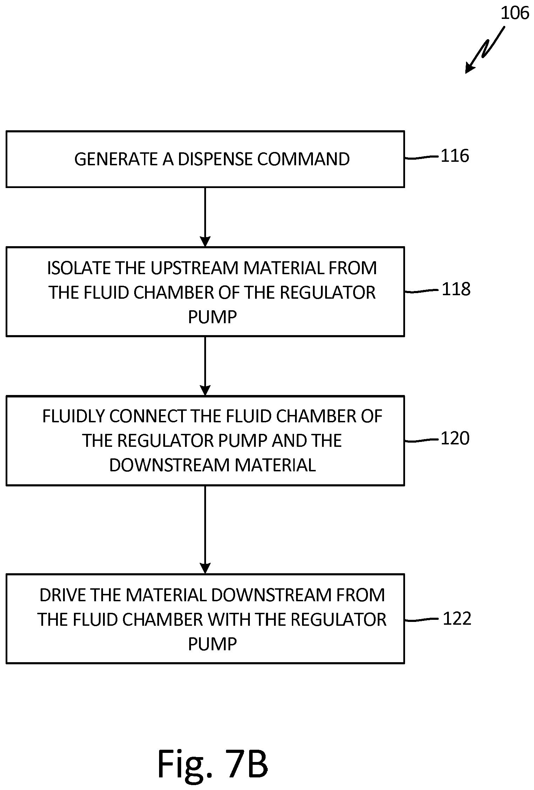

FIG. 7A is a flow chart depicting refill cycle 104. FIG. 7B is a flow chart depicting dispense cycle 106. FIGS. 7A and 7B will be discussed together. In step 108, a fill signal is generated. The fill signal can be generated based on a volume of material displaced from a regulator pump, such as regulator pump 16 (FIGS. 1-4). In some examples, a sensor, such as status sensor 40 (best seen in FIGS. 1-4), can sense when the regulator pump is ready to begin a refill cycle. For example, the status sensor can sense when the volume of material in the regulator pump reaches a minimum volume, and can generate the fill signal in response to the volume of material reaching the minimum volume. Any suitable sensor can be utilized for sensing when regulator pump requires a refill, such as linear, pressure, temperature, and/or flow rate transducers. In some examples, the fill signal can be provided to a controller, such as controller 12 (shown in FIGS. 1 and 3), and the controller can generate a fill command based on the fill signal. In other examples, the fill signal can be provided to an actuator, such as actuator 20 (shown in FIGS. 2 and 4), to cause the actuator to initiate the refill cycle. In such a case, the fill signal is the fill command.

In step 110, a downstream material is fluidly isolated from the regulator pump. To isolate the downstream material an outlet valve, such as outlet valve 38b (FIGS. 1-6A), is shifted to a closed position. In some examples, the controller can cause the outlet valve to shift to the closed position. For example, the controller can generate the fill command based on the fill signal and can provide the fill command to an actuator. The actuator can actuate the outlet valve to the closed position by venting or providing motive fluid to the outlet valve, for example. In other examples, where the fill signal is provided directly to the actuator, the fill signal can function as the fill command and can cause the actuator to shift the outlet valve to the closed position. For example, the fill signal can cause a three-way valve connected to the outlet valve and to an inlet valve, such as inlet valve 38a (FIGS. 1-6A), to cause the three-way valve to shift positions, thereby causing the outlet valve to shift closed.

In step 112, an upstream material is fluidly connected to the regulator pump. The inlet valve is shifted to an open position in response to the fill command. It is understood, however, that the inlet valve opens only when the outlet valve closes. As such, the downstream material remains isolated from the upstream material such that the upstream pressure has no effect on the downstream pressure. In some examples, the controller can generate the fill command based on the fill signal and can provide the fill command to an actuator. The actuator can actuate the inlet valve to the open position. For example, the actuator can provide motive fluid, such as compressed air or hydraulic fluid, to or vent motive fluid from the inlet valve. In other examples, where the fill signal is provided directly to the actuator, the fill signal can function as the fill command, such that the actuator actuates the inlet valve to the open position based on the fill signal. For example, the fill signal can cause a three-way valve connected to the outlet valve and to an inlet valve to shift positions, thereby causing the inlet valve to actuate from the closed position to the open position.

In step 114, a pump full signal is generated. The status sensor can sense when the volume of material in fluid chamber has reached a material capacity and can generate the pump full signal in response to the material in fluid chamber reaching the material capacity. The pump full signal can be provided to the controller, and the pump full signal indicates that the regulator pump has completed the refill cycle and is primed for a dispense cycle.

In step 116, of FIG. 7B, a dispense command is generated. The dispense command causes the regulator pump to enter the dispense cycle, where the regulator pump is fluidly connected to the downstream material and fluidly disconnected from the upstream material.

In some examples, such as flow regulating systems with multiple regulator pumps, such as flow regulating system 10" (FIG. 3) and flow regulating system 10'" (FIG. 4), the dispense command can be generated based on a first fill signal from a first regulator pump. The controller can generate a first dispense command based on the first fill signal, and the first dispense command can cause a second regulator pump, which has already completed a fill cycle, to enter the dispense cycle. As such, one of the regulator pumps is fluidly connected downstream and providing material downstream while the other of the regulator pumps is fluidly connected upstream and refilling with material for the next dispense cycle. The flow regulating system is configured such that at least one of the regulator pumps is fluidly connected downstream to ensure a continuous downstream supply of material.

In other examples, the controller can generate the dispense command based on the pump full signal. For example, the regulator pump can enter the refill cycle when the material is deadheaded, such as where downstream applicators are between application cycles, and can begin the dispense cycle immediately after completing the refill cycle based on the pump full command, such that the regulator pump is fluidly connected to the applicators before the next application cycle. In additional examples, the pump full signal can function as the dispense command, such as where the pump full signal is provided directly to the actuator to cause the actuator to actuate the inlet valve and the outlet valve.

In step 118, the upstream material is fluidly isolated from the regulator pump. For example, the inlet valve can shift to the closed position based on the dispense command. In some examples, the controller can provide the dispense command to the actuator to cause the actuator to provide motive fluid to or vent motive fluid from the inlet valve to cause the inlet valve to shift to the closed position. In other examples, such as where the pump full signal is provided directly to the actuator, the pump full signal can function as the dispense command, such that the actuator shifts the inlet valve to the closed position based on the pump full signal. For example, the fill signal can cause a three-way valve connected to the outlet valve and to an inlet valve to shift positions, thereby causing the inlet valve to shift from the open position to the closed position.

In step 120, the downstream material is fluidly connected to the regulator pump. For example, the outlet valve can shift to the open position in response to the dispense command. In some examples, the controller can provide the dispense command to the actuator to cause the actuator to provide motive fluid to or vent motive fluid from the outlet valve to cause the outlet valve to shift to the open position. In other examples, such as where the pump full signal is provided directly to the actuator, the pump full signal can function as the dispense command, such that the actuator shifts the outlet valve to the open position based on the pump full signal. For example, the fill signal can cause a three-way valve connected to the outlet valve and to an inlet valve to shift positions, thereby causing the outlet valve to shift from the closed position to the open position. The downstream material is fluidly connected to the regulator pump only where the upstream material is fluidly isolated from the regulator pump, such that the upstream pressure has no effect on the downstream pressure

In step 122, the regulator pump drives the material downstream at a desired downstream pressure. For example, a fluid displacement member, such as fluid displacement member 42 (best seen in FIGS. 5B and 6C), can be driven through a pressure stroke to drive the material downstream from the regulator pump. In some examples, the controller and/or the actuator can electrically drive the fluid displacement member, such as by powering a solenoid attached to and driving the fluid displacement member. In other examples, the actuator can provide a working fluid, such as compressed air or a non-compressible hydraulic fluid, to the regulator pump to drive the fluid displacement member. The regulator pump is controlled to produce a desired downstream pressure and/or flow rate. In some examples, the regulator pump is configured to provide a 1:1 pressure ratio between the working fluid and the downstream pressure. As such, the downstream pressure can be controlled by controlling the working fluid pressure driving the fluid displacement member. The regulator pump continues to dispense the material until the regulator pump requires a refill, at which point the regulator pump is ready for another refill cycle and the process proceeds back to step 108.

The outlet valve of the regulator pump is configured to be in the closed position whenever the inlet valve is in the open position. As such, the upstream pressure has no effect on the downstream pressure. By isolating the downstream pressure from the upstream pressure, the downstream pressure can be specifically controlled to provide whatever pressure and/or flow rate is desired. The regulator pump generates the downstream pressure by driving the material out of the fluid chamber, such that the upstream pressure has no effect on the downstream pressure. As such, the material can be provided to the regulator pump at high flow rates and pressures while leaving the downstream pressure unaffected.

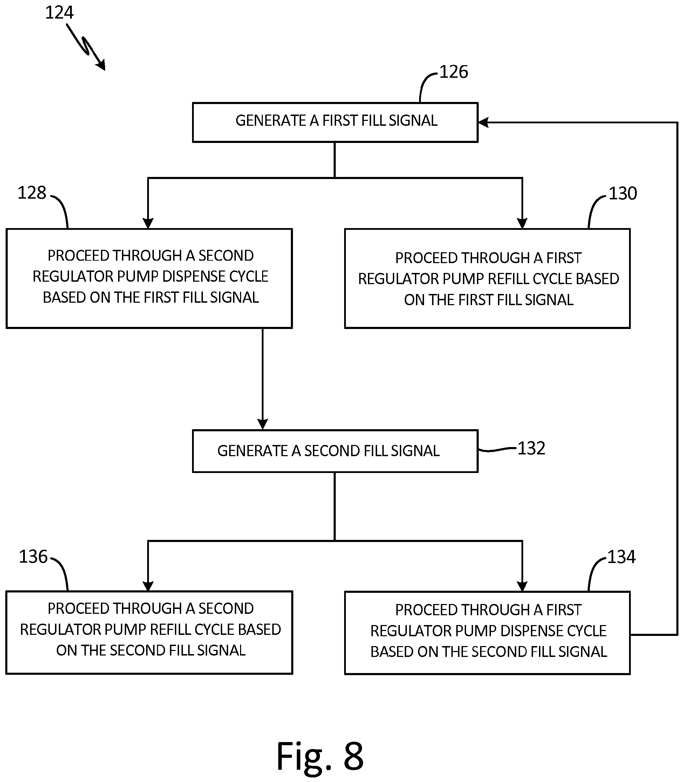

FIG. 8A is a flow diagram depicting method 124 of dispensing material in a multiple regulator pump system. In step 126, a first fill signal is generated. The first fill signal can be generated based on a volume of material displaced from a first regulator pump, such as regulator pump 16a (FIGS. 2 and 4). In some examples, a sensor, such as status sensor 40a (FIGS. 2 and 4), can sense when the first regulator pump is ready to begin a refill cycle. For example, the status sensor can sense when the volume of material in the first regulator pump reaches a minimum volume, and can generate the first fill signal in response to the volume of material reaching the minimum volume. Any suitable sensor can be utilized for sensing when the first regulator pump requires a refill, such as linear, pressure, temperature, and/or flow rate transducers. In some examples, the first fill signal can be provided to a controller, such as controller 12 (shown in FIGS. 1 and 3), and the controller can generate a first fill command based on the first fill signal. In other examples, the first fill signal can be provided to an actuator, such as actuator 20 (shown in FIGS. 2 and 4), to cause the actuator to initiate the refill cycle. Based on the first fill signal generated in step 126, method 124 proceeds to steps 128 and 130.

In step 128, a second regulator pump, such as regulator pump 16b (FIGS. 2 and 4) proceeds through a dispense cycle based on the first fill signal. In step 130, a first regulator pump proceeds through a refill cycle based on the first fill signal. The second regulator pump enters the dispense cycle prior to the first regulator pump entering the refill cycle, thereby preventing any loss in pressure and/or flow to a downstream applicators.

In step 128, the downstream material applicator is fluidly connected to the second regulator pump and the upstream material supply is fluidly isolated from the second regulator pump. To connect the downstream material, a second outlet valve, such as outlet valve 38d (FIGS. 2 and 4), is shifted to an open position. To isolate the upstream material, a second inlet valve, such as inlet valve 38c (FIGS. 2 and 4), is shifted to a closed position. It is understood, that the second inlet valve can shift to the closed position at the beginning of a dispense cycle or can shift to the closed position at the end of a previous refill cycle. The second outlet valve opens only when the second inlet valve is closed, ensuring that the upstream fluid pressure has no effect on the downstream fluid pressure. In some examples, the controller can provide a first dispense command to the actuator to cause the actuator to shift the second inlet valve to the closed position and to shift the second outlet valve to the open position. In other examples, the first fill signal can function as the first dispense command such that the actuator shifts the second inlet valve to the closed position and shifts the second outlet valve to the open position in response to the first fill signal.

With the second outlet valve in the open position and the second inlet valve in the closed position, the second regulator pump drives the material within the second regulator pump downstream through the second outlet valve. For example, a fluid displacement member, such as fluid displacement member 42 (best seen in FIGS. 5B and 6C), can be driven through a pressure stroke to drive the material downstream from the second regulator pump. In some examples, the controller and/or the actuator can electrically drive the fluid displacement member, such as by powering a solenoid attached to and driving the fluid displacement member. In other examples, the actuator can provide a working fluid, such as compressed air or a non-compressible hydraulic fluid, to the second regulator pump to drive the fluid displacement member. The second regulator pump is controlled to produce a desired downstream pressure and/or flow rate. In some examples, the second regulator pump is configured to provide a 1:1 pressure ratio between the working fluid and the downstream pressure. As such, the downstream pressure can be controlled by controlling the working fluid pressure driving the fluid displacement member. The second regulator pump continues to dispense the material until the second regulator pump requires a refill.

In step 130, the downstream material applicator is fluidly isolated from the first regulator pump and an upstream material supply is fluidly connected to the first regulator pump. To isolate the downstream material, a first outlet valve, such as outlet valve 36b (FIGS. 1-6A), is shifted to a closed position. The first outlet valve can shift to the closed position after or simultaneous to the second outlet valve shifting to the open position. As such, the downstream pressure and flow are maintained because at least one of the first outlet valve and the second outlet valve is in the open position. To connect the upstream material, a first inlet valve, such as inlet valve 38a (FIGS. 1-6A) can shift to an open position. The first inlet valve opens only when the first outlet valve is closed, ensuring that the upstream fluid pressure has no effect on the downstream fluid pressure. In some examples, the controller can provide a first fill command to the actuator to cause the actuator to shift the first outlet valve to the closed position and to shift the first inlet valve to the open position. In other examples, the first fill signal can function as the first fill command such that the actuator shifts the first outlet valve to the closed position and shifts the first inlet valve to the open position in response to the first fill signal.

With the first inlet valve open, the upstream pressure drives the material into the first regulator pump to fill a fluid chamber of the first regulator pump. Opening the inlet valve and closing the outlet valve fully isolates the upstream material form the downstream material such that the upstream pressure has no effect on the downstream pressure. In some examples, the first inlet valve shifts to the closed position at the end of the first regulator pump refill cycle. For example, the first regulator pump can generate a first pump full signal when full, and the actuator can cause the first inlet valve to shift to the closed position based on the first pump full signal. As such, the first regulator pump can be isolated from the upstream material at the end of the first regulator pump refill cycle. The first regulator pump is thus primed for a first regulator pump dispense cycle.

In step 132, a second fill signal is generated. The second fill signal can be generated based on a volume of material displaced from a second regulator pump. In some examples, a sensor, such as status sensor 40b (FIGS. 2 and 4), can sense when the second regulator pump is ready to begin a refill cycle. For example, the status sensor can sense when the volume of material in the second regulator pump reaches a minimum volume, and can generate the first fill signal in response to the volume of material reaching the minimum volume. The second fill signal can be provided to the controller and/or to the actuator. Based on the second fill signal generated in step 132, method 124 proceeds to steps 134 and 136.

In step 134, the first regulator pump proceeds through a dispense cycle based on the second fill signal. In step 136, the second regulator pump proceeds through a refill cycle based on the second fill signal. The first regulator pump enters the dispense cycle prior to the second regulator pump entering the refill cycle, thereby preventing any loss in pressure and/or flow to a downstream applicators.

In step 134, the first regulator pump proceeds through a dispense cycle based on the second fill signal. The actuator causes the first inlet valve to shift to the closed position, fluidly isolating the upstream material from the first regulator pump. In some examples, the first inlet valve is closed at the end of the first regulator pump refill cycle, such as in response to the first pump full signal, for example. The actuator causes the first outlet valve to shift to the open position, fluidly connecting the downstream material and the first regulator pump. With the first outlet valve in the open position and the first inlet valve in the closed position, the first regulator pump drives the material within the first regulator pump downstream through the first outlet valve. In some examples, the controller and/or the actuator can electrically drive the fluid displacement member, such as by powering a solenoid attached to and driving the fluid displacement member. In other examples, the actuator can provide a working fluid, such as compressed air or a non-compressible hydraulic fluid, to the first regulator pump to drive the fluid displacement member. The first regulator pump continues to dispense the material until the first regulator pump requires a refill. When the first regulator pump requires a refill, method 124 proceeds back to step 126, and the first fill signal is generated.

In step 136, the second regulator pump proceeds through a refill cycle based on the second fill signal. The actuator causes the second outlet valve to shift to the closed position, fluidly isolating the downstream material from the second regulator pump. The second outlet valve can shift to the closed position after or simultaneous to the first outlet valve shifting to the open position, ensuring that the downstream pressure and flow are maintained because at least one of the first outlet valve and the second outlet valve is in the open position. The actuator further causes the second inlet valve to shift to the open position, fluidly connecting the upstream material and the second regulator pump. The material flows into the second regulator pump through the second inlet valve to refill the second regulator pump with the material. In some examples, the second inlet valve shifts to the closed position at the end of the second regulator pump refill cycle. For example, the second regulator pump can generate a second pump full signal when full, and the actuator can cause the second inlet valve to shift to the closed position based on the second pump full signal. As such, the second regulator pump can be isolated from the upstream material at the end of the second regulator pump refill cycle. The second regulator pump is thus primed for a second regulator pump dispense cycle.

One of the first regulator pump and the second regulator pump dispenses material downstream at a desired flow rate and pressure as the other of the first regulator pump and the second regulator pump refills with the material. As such, a constant supply of the material is supplied downstream at the desired flow rate and pressure. In addition, each outlet valve is configured to be in the closed position whenever the associated inlet valve is in the open position. As such, the upstream pressure has no effect on the downstream pressure. By isolating the downstream pressure from the upstream pressure, the downstream pressure can be specifically controlled to provide whatever pressure and/or flow rate is desired. The regulator pumps generate the downstream pressure by driving the material downstream with a fluid displacement member. As such, the material can be provided to the regulator pump at high flow rates and pressures while leaving the downstream pressure unaffected.

## Claims

1. A regulator pump (16) comprising:
a first fluid chamber (48);
a first inlet valve (38a) configured to control a fluid flow into the first fluid chamber;
a first outlet valve (38b) configured to control the fluid flow out of the first fluid chamber; and
a fluid displacement member (42) at least partially bounding the first fluid chamber on a first side of the fluid displacement member and at least partially bounding a working fluid chamber (50) on a second side of the fluid displacement member, the fluid displacement member comprising:
a diaphragm (74) at least partially bounding the first fluid chamber; and
the fluid displacement member being configured to drive a material downstream through the first outlet valve at a downstream pressure;
a status sensor (40) connected to the regulator pump, the status sensor configured to generate a first fill signal based on the volume of material within the first fluid chamber being at a refill volume and to generate a first pump full signal based on the volume of material within the first fluid chamber being at a full volume,
wherein the first outlet valve is configured to be in an open position only when the first inlet valve is in a closed position such that the downstream pressure is isolated from and independent of an upstream pressure,
wherein the first fluid displacement member is configured to be driven through a forward stroke by a working fluid disposed within the working fluid chamber,
**characterized by** the fluid displacement member further comprising:
a shaft (72) connected to and extending rearward of the diaphragm into a shaft bore (78) within a body (44) of the regulator pump; wherein
the status sensor is configured to generate the first fill signal and the first pump full signal based at least in part on a position of the shaft and
wherein the first fluid displacement member is configured to be driven through a rearward stroke by a fluid pressure of the fluid disposed upstream of the first inlet valve; and wherein
the first fluid chamber is fluidly isolated from the working fluid chamber when the first outlet valve is in the open position and the first inlet valve is in the closed position, and the first fluid chamber is fluidly isolated from the working fluid chamber when the first inlet valve is in an open position and the first outlet valve is in a closed position; and
the fluid displacement member is configured to drive the material downstream through the first outlet valve to an applicator disposed downstream of the fluid displacement member.

2. The regulator pump of claim 1, wherein:
the body (44) is connected to a cover plate (46), and the fluid displacement member is retained between the body and the cover plate;
the working fluid chamber (50) is defined by the body and the fluid displacement member, and
the first fluid chamber is defined by the cover plate and the fluid displacement member.

3. The regulator pump of claim 2, further comprising:
a pilot valve (86) disposed in the body, and a pin (100) of the pilot valve extending into the working fluid chamber;
a diaphragm plate (90) disposed on the diaphragm, the diaphragm plate configured to contact the pin and drive the pilot valve to an open position when the first fluid chamber is at the full volume;
wherein the status sensor is configured to generate the first pump full signal based at least in part on the pilot valve being in the open position, as well as on the position of the shaft.

4. The regulator pump of claim 3, wherein the status sensor comprises a pressure transducer configured to sense a change in pressure within a signal passage (94) within the body, the signal passage (94) extending between the shaft bore and a status sensor port and in fluid communication with the pilot valve.

5. A flow regulating system (10) comprising:
a first regulator pump (16) according to any of claims 1 to 4;
a material supply (14) disposed upstream of the first regulator pump and fluidly connected to the first inlet valve, the material supply configured to provide the material to the first inlet valve at the upstream pressure; and
an applicator (18) disposed downstream of the first regulator pump and fluidly connected to the first outlet valve;
wherein the first regulator pump is configured to fluidly isolate the material supply from the applicator.

6. The flow regulating system of claim 5, further comprising:
a first actuator (20) connected to the first inlet valve and the first outlet valve; and
wherein the first actuator is configured to provide motive fluid to the first inlet valve based on the first fill signal, to thereby cause the first inlet valve to shift to the open position, and to vent motive fluid from the first outlet valve based on the first fill signal, to thereby cause the first outlet valve to shift to the closed position.

7. The flow regulating system of claim 5 or claim 6, further comprising:
a controller (12) configured to control the flow of the material, the controller comprising:
a processor (34); and
a memory (32) encoded with instructions that, when executed by the processor, cause the processor to generate a first fill command based on the first fill signal, the first fill command configured to cause the first regulator pump to proceed through a first refill cycle;
wherein the first inlet valve is configured to open in response to the first fill command such that the material can flow into the first fluid chamber through the first inlet valve, and the first outlet valve is configured to close in response to the first fill command such that the material is prevented from flowing out of the first fluid chamber through the first outlet valve.

8. The flow regulating system of claim 7, wherein:
the memory is encoded with instructions that, when executed by the processor, cause the processor to generate a first dispense command based on the first pump full signal;
the first inlet valve is configured to close in response to the first dispense command such that the first fluid chamber is fluidly isolated from the material supply, and
the first outlet valve is configured to open in response to the first dispense command such that the first fluid chamber is fluidly connected to the applicator.

9. The flow regulating system of claim 8, wherein a second actuator is configured to provide a supply of working fluid to the first regulator pump based on the first dispense command, the working fluid configured to drive the fluid displacement member through the first fluid chamber and to generate the downstream pressure.

10. The flow regulating system of any one of claims 5 to 9, wherein the status sensor is selected from the group consisting of a linear transducer and a pressure transducer.

11. The flow regulating system of claim 8, further comprising:
a second regulator pump (16b) fluidly connected to the material supply and the applicator, the second regulator pump comprising:
a second fluid chamber;
a second inlet valve (38c) configured to control the fluid flow into the second fluid chamber;
a second outlet valve (38d) configured to control the fluid flow out of the second fluid chamber;
a second fluid displacement member (42) at least partially bounding the second fluid chamber, the second fluid displacement member configured to drive the material downstream through the second outlet valve at the downstream pressure; and
a second status sensor (40b) configured to sense a volume of material within the second fluid chamber and to generate a second fill signal based on the volume of material being at a refill volume and to generate a second pump full signal based on the volume of material being at a full volume;
wherein the controller is configured to generate a second dispense command based on the first fill signal; and
wherein the second inlet valve is configured to close in response to the second dispense command such that the second fluid chamber is fluidly isolated from the material supply, and the second outlet valve is configured to open in response to the second dispense command such that the second fluid chamber is fluidly connected to the applicator.

12. The flow regulating system of claim 11, wherein:
the processor is configured to generate a second fill command based on the second fill signal and to generate a first dispense command based on the second fill signal; and
the first inlet valve is configured to close in response to the first dispense command and the first outlet valve is configured to open in response to the first dispense command, the second inlet valve is configured to open in response to the second fill command, and the second outlet valve is configured to close in response to the second fill command.

13. The flow regulating system of claim 11, further comprising:
a second actuator configured to provide a second supply of working fluid to the second regulator pump based on the second dispense command and a first supply of working fluid to the first regulator pump based on the first dispense command;
wherein the second supply of working fluid is configured to drive the second fluid displacement member to produce the downstream pressure, and the first supply of working fluid is configured to drive the first fluid displacement member to produce the downstream pressure.

14. A method of flow control, the method comprising:
generating a first fill signal based on an actual material volume in a first fluid chamber of a first regulator pump (16) being at a refill volume;
proceeding through a first pump refill cycle based on a first fill command to fill the first regulator pump with material, wherein the first pump refill cycle comprises:
fluidly isolating the first fluid chamber from a downstream material flow;
fluidly connecting the first fluid chamber to an upstream material flow having a first fluid pressure
**characterized by**
driving a fluid displacement member (42) of the first regulator pump in a rearward direction with the first fluid pressure of the upstream material flow to increase a volume of the first fluid chamber: and
generating a first pump full signal based on the volume of material within the first fluid chamber being at a full volume; and
proceeding through a first pump dispense cycle based on a first dispense command, wherein the first pump dispense cycle comprises:
fluidly isolating the first fluid chamber from the upstream material flow;
fluidly connecting the first fluid chamber to the downstream material flow; and
providing a working fluid to a working fluid chamber of the first regulator pump (16), the working fluid driving the fluid displacement member (42) in a forward direction to generate a downstream pressure and drive the material downstream out of the first fluid chamber to an applicator disposed downstream of the fluid displacement member during the first pump dispense cycle;
wherein the working fluid chamber is fluidly isolated from the first fluid chamber during each of the first pump refill cycle and the first pump dispense cycle;
wherein the fluid displacement member comprises:
a diaphragm (74) at least partially bounding the first fluid chamber; and
a shaft (72) connected to and extending rearward of the diaphragm into a shaft bore (78) within a body (44) of the first regulator pump;
wherein the step of generating the first fill signal comprises generating the first fill signal with a status sensor (40) based at least in part on a position of the shaft (72), and
wherein the step of generating the first pump full signal comprises generating the first pump full signal with the status sensor (40) based at least in part on a position of the shaft (72),

## Patentansprüche

1. Reglerpumpe (16), die umfasst:
eine erste Fluidkammer (48);
ein erstes Einlassventil (38a), das dafür konfiguriert ist, einen Fluidstrom in die erste Fluidkammer hinein zu steuern;
ein erstes Auslassventil (38b), das dafür konfiguriert ist, den Fluidstrom aus der ersten Fluidkammer heraus zu steuern; und
ein Fluidverdrängungselement (42), das die erste Fluidkammer auf einer ersten Seite des Fluidverdrängungselements mindestens teilweise begrenzt und eine Arbeitsfluidkammer (50) auf einer zweiten Seite des Fluidverdrängungselements mindestens teilweise begrenzt, wobei das Fluidverdrängungselement umfasst:
eine Membran (74), die die erste Fluidkammer mindestens teilweise begrenzt; und
wobei das Fluidverdrängungselement dafür konfiguriert ist, ein Material stromabwärts durch das erste Auslassventil mit einem stromabwärtigen Druck zu bewegen;
einen Statussensor (40), der mit der Reglerpumpe verbunden ist, wobei der Statussensor dafür konfiguriert ist, ein erstes Befüllungssignal auf der Grundlage zu generieren, dass sich das Materialvolumens in der ersten Fluidkammer auf einem Neubefüllungsvolumen befindet, und ein erstes Pumpe-Voll-Signal auf der Grundlage zu generieren, dass sich das Materialvolumen in der ersten Fluidkammer auf einem Voll-Volumen befindet,
wobei das erste Auslassventil dafür konfiguriert ist, sich nur dann in einer offenen Position zu befinden, wenn sich das erste Einlassventil in einer geschlossenen Position befindet, so dass der stromabwärtige Druck von einem stromaufwärtigen Druck isoliert und unabhängig ist,
wobei das erste Fluidverdrängungselement dafür konfiguriert ist, mittels eines Vorwärtshubes durch ein Arbeitsfluid angetrieben zu werden, das sich in der Arbeitsfluidkammer befindet,
**dadurch gekennzeichnet, dass**:
das Fluidverdrängungselement des Weiteren umfasst:
eine Welle (72), die mit der Membran verbunden ist und sich hinter der Membran in eine Wellenbohrung (78) innerhalb eines Körpers (44) der Reglerpumpe hinein erstreckt;
wobei der Zustandssensor dafür konfiguriert ist, das erste Befüllungssignal und das erste Pumpe-Voll-Signal mindestens teilweise auf der Grundlage einer Position der Welle zu generieren, und
wobei das erste Fluidverdrängungselement dafür konfiguriert ist, mittels eines Rückwärtshubes durch einen Fluiddruck des stromaufwärts des ersten Einlassventils angeordneten Fluids angetrieben zu werden; und
wobei die Strömungsverbindung zwischen der ersten Fluidkammer und der Arbeitsfluidkammer getrennt ist, wenn das erste Auslassventil in der offenen Position ist und das erste Einlassventil in der geschlossenen Position ist, und die Strömungsverbindung zwischen der ersten Fluidkammer und der Arbeitsfluidkammer getrennt ist, wenn das erste Einlassventil in einer offenen Position ist und das erste Auslassventil in einer geschlossenen Position ist; und
das Fluidverdrängungselement dafür konfiguriert ist, das Material durch das erste Auslassventil stromabwärts zu einem stromabwärts des Fluidverdrängungselements angeordneten Applikator zu bewegen.

2. Reglerpumpe nach Anspruch 1, wobei:
der Körper (44) mit einer Abdeckplatte (46) verbunden ist, und das Fluidverdrängungselement zwischen dem Körper und der Abdeckplatte gehalten wird;
die Arbeitsfluidkammer (50) durch den Körper und das Fluidverdrängungselement definiert wird und die erste Fluidkammer durch die Abdeckplatte und das Fluidverdrängungselement definiert wird.

3. Reglerpumpe nach Anspruch 2, die des Weiteren umfasst:
ein Pilotventil (86), das in dem Körper angeordnet ist, und einen Stift (100) des Pilotventils, der sich in die Arbeitsfluidkammer hinein erstreckt;
eine Membranplatte (90), die auf der Membran angeordnet ist, wobei die Membranplatte dafür konfiguriert ist, den Stift zu berühren und das Pilotventil in eine offene Position anzutreiben, wenn sich die erste Fluidkammer auf dem Voll-Volumen befindet;
wobei der Statussensor dafür konfiguriert ist, das erste Pumpe-Voll-Signal mindestens teilweise auf der Grundlage, dass sich das Pilotventil in der offenen Position befindet, sowie auf der Grundlage der Position der Welle zu generieren.

4. Reglerpumpe nach Anspruch 3, wobei der Zustandssensor einen Druckmesswandler umfasst, der dafür konfiguriert ist, eine Druckänderung in einem Signaldurchgang (94) innerhalb des Körpers zu erfassen, wobei sich der Signaldurchgang (94) zwischen der Wellenbohrung und einem Zustandssensorport erstreckt und in Strömungsverbindung mit dem Pilotventil steht.

5. Strömungsregulierungssystem (10), das umfasst:
eine erste Reglerpumpe (16) nach einem der Ansprüche 1 bis 4;
eine Materialzufuhr (14), die stromaufwärts der ersten Reglerpumpe angeordnet ist und mit dem ersten Einlassventil in Strömungsverbindung steht, wobei die Materialzufuhr dafür konfiguriert ist, das Material dem ersten Einlassventil mit dem stromaufwärtigen Druck zuzuführen; und
einen Applikator (18), der stromabwärts der ersten Reglerpumpe angeordnet ist und mit dem ersten Auslassventil in Strömungsverbindung steht;
wobei die erste Reglerpumpe dafür konfiguriert ist, die Strömungsverbindung zwischen der Materialzufuhr und dem Applikator zu trennen.

6. Strömungsregulierungssystem nach Anspruch 5, das des Weiteren umfasst:
einen ersten Aktuator (20), der mit dem ersten Einlassventil und dem ersten Auslassventil verbunden ist; und
wobei der erste Aktuator dafür konfiguriert ist, dem ersten Einlassventil auf der Grundlage des ersten Befüllungssignals Antriebsfluid zuzuführen, um so zu bewirken, dass sich das erste Einlassventil in die offene Position bewegt, und auf der Grundlage des ersten Befüllungssignals Antriebsfluid aus dem ersten Auslassventil abzulassen, um so zu bewirken, dass sich das erste Auslassventil in die geschlossene Position bewegt.

7. Strömungsregulierungssystem nach Anspruch 5 oder Anspruch 6, das des Weiteren umfasst:
einen Controller (12), der dafür konfiguriert ist, den Materialfluss zu steuern, wobei der Controller umfasst:
einen Prozessor (34); und
einen Speicher (32), der mit Instruktionen codiert ist, die, wenn sie durch den Prozessor ausgeführt werden, den Prozessor veranlassen, einen ersten Füllbefehl auf der Grundlage des ersten Befüllungssignals zu generieren, wobei der erste Füllbefehl dafür konfiguriert ist, die erste Reglerpumpe zu veranlassen, einen ersten Neubefüllungszyklus zu durchlaufen;
wobei das erste Einlassventil dafür konfiguriert ist, sich in Reaktion auf den ersten Füllbefehl zu öffnen, so dass das Material durch das erste Einlassventil in die erste Fluidkammer einströmen kann, und das erste Auslassventil dafür konfiguriert ist, sich in Reaktion auf den ersten Füllbefehl zu schließen, so dass das Material daran gehindert wird, durch das erste Auslassventil aus der ersten Fluidkammer herauszuströmen.

8. Strömungsregulierungssystem nach Anspruch 7, wobei:
der Speicher mit Instruktionen codiert ist, die, wenn sie durch den Prozessor ausgeführt werden, den Prozessor veranlassen, einen ersten Abgabebefehl auf der Grundlage des ersten Pumpe-Voll-Signals zu generieren;
das erste Einlassventil dafür konfiguriert ist, sich in Reaktion auf den ersten Abgabebefehl zu schließen, so dass die Strömungsverbindung zwischen der ersten Fluidkammer und der Materialzufuhr getrennt ist, und das erste Auslassventil dafür konfiguriert ist, sich in Reaktion auf den ersten Abgabebefehl zu öffnen, so dass die erste Fluidkammer in Strömungsverbindung mit dem Applikator steht.

9. Strömungsregulierungssystem nach Anspruch 8,
wobei ein zweiter Aktuator dafür konfiguriert ist, die erste Reglerpumpe auf der Grundlage des ersten Abgabebefehls mit einer Zufuhr von Arbeitsfluid zu beaufschlagen, wobei das Arbeitsfluid dafür konfiguriert ist, das Fluidverdrängungselement durch die erste Fluidkammer hindurch anzutreiben und den stromabwärtigen Druck zu generieren.

10. Strömungsregulierungssystem nach einem der Ansprüche 5 bis 9,
wobei der Zustandssensor aus der Gruppe bestehend aus einem linearen Messwandler und einem Druckmesswandler ausgewählt ist.

11. Strömungsregulierungssystem nach Anspruch 8, das des Weiteren umfasst:
eine zweite Reglerpumpe (16b), die mit der Materialzufuhr und dem Applikator in Strömungsverbindung steht, wobei die zweite Reglerpumpe umfasst:
eine zweite Fluidkammer;
ein zweites Einlassventil (38c), das dafür konfiguriert ist, den Fluidstrom in die zweite Fluidkammer hinein zu steuern;
ein zweites Auslassventil (38d), das dafür konfiguriert ist, den Fluidstrom aus der zweiten Fluidkammer heraus zu steuern; und
ein zweites Fluidverdrängungselement (42), das die zweite Fluidkammer mindestens teilweise begrenzt, wobei das zweite Fluidverdrängungselement dafür konfiguriert ist, das Material stromabwärts durch das zweite Auslassventil mit dem stromabwärtigen Druck zu bewegen; und
einen zweiten Zustandssensor (40b), der dafür konfiguriert ist, ein Materialvolumen innerhalb der zweiten Fluidkammer zu erfassen und ein zweites Befüllungssignal auf der Grundlage zu generieren, dass sich das Materialvolumen auf einem Neubefüllungsvolumen befindet, und ein zweites Pumpe-Voll-Signal auf der Grundlage zu generieren, dass sich das Materialvolumen auf einem Voll-Volumen befindet;
wobei der Controller dafür konfiguriert ist, einen zweiten Abgabebefehl auf der Grundlage des ersten Befüllungssignal zu generieren; und
wobei das zweite Einlassventil dafür konfiguriert ist, sich in Reaktion auf den zweiten Abgabebefehl zu schließen, so dass die Strömungsverbindung zwischen der zweiten Fluidkammer und der Materialzufuhr getrennt ist, und das zweite Auslassventil dafür konfiguriert ist, sich in Reaktion auf den zweiten Abgabebefehl zu öffnen, so dass die zweite Fluidkammer in Strömungsverbindung mit dem Applikator steht.

12. Strömungsregulierungssystem nach Anspruch 11, wobei:
der Prozessor dafür konfiguriert ist, einen zweiten Füllbefehl auf der Grundlage des zweiten Befüllungssignal zu generieren und einen ersten Abgabebefehl auf der Grundlage des zweiten Befüllungssignals zu generieren; und
das erste Einlassventil dafür konfiguriert ist, sich in Reaktion auf den ersten Abgabebefehl zu schließen, und das erste Auslassventil dafür konfiguriert ist, sich in Reaktion auf den ersten Abgabebefehl zu öffnen, das zweite Einlassventil dafür konfiguriert ist, sich in Reaktion auf den zweiten Füllbefehl zu öffnen, und das zweite Auslassventil dafür konfiguriert ist, sich in Reaktion auf den zweiten Füllbefehl zu schließen.

13. Strömungsregulierungssystem nach Anspruch 11, das des Weiteren umfasst:
einen zweiten Aktuator, der dafür konfiguriert ist, die zweite Reglerpumpe auf der Grundlage des zweiten Abgabebefehls mit einer zweiten Zufuhr von Arbeitsfluid zu beaufschlagen und die erste Reglerpumpe auf der Grundlage des ersten Abgabebefehls mit einer ersten Zufuhr von Arbeitsfluid zu beaufschlagen;
wobei die zweite Zufuhr von Arbeitsfluid dafür konfiguriert ist, das zweite Fluidverdrängungselement anzutreiben, um den stromabwärtigen Druck zu erzeugen, und die erste Zufuhr von Arbeitsfluid dafür konfiguriert ist, das erste Fluidverdrängungselement anzutreiben, um den stromabwärtigen Druck zu erzeugen.

14. Verfahren zur Strömungssteuerung, wobei das Verfahren umfasst:
Generieren eines ersten Befüllungssignals auf der Grundlage, dass sich ein Ist-Materialvolumen in einer ersten Fluidkammer einer ersten Reglerpumpe (16) auf einem Neubefüllungsvolumen befindet;
Durchlaufen eines ersten Pumpen-Neubefüllungszyklus auf der Grundlage eines ersten Befüllungsbefehls, um die erste Reglerpumpe mit Material zu befüllen,
wobei der erste Pumpen-Neubefüllungszyklus umfasst:
Trennen der Strömungsverbindung zwischen der ersten Fluidkammer und einem stromabwärtigen Materialstrom;
Herstellen einer Strömungsverbindung zwischen der ersten Fluidkammer und einem stromaufwärtigen Materialstrom, der einen ersten Fluiddruck aufweist;
**dadurch gekennzeichnet, dass**:
Antreiben eines Fluidverdrängungselements (42) der ersten Reglerpumpe in einer Rückwärtsrichtung mit dem ersten Fluiddruck des stromaufwärtigen Materialstroms, um ein Volumen der ersten Fluidkammer zu vergrößern; und
Generieren eines ersten Pumpe-Voll-Signals auf der Grundlage, dass sich das Volumen des Materials in der ersten Fluidkammer auf einem Voll-Volumen befindet; und
Durchlaufen eines ersten Pumpen-Abgabezyklus auf der Grundlage eines ersten Abgabebefehls, wobei der erste Pumpen-Abgabezyklus umfasst:
Trennen der Strömungsverbindung zwischen der ersten Fluidkammer und dem stromaufwärtigen Materialstrom;
Herstellen einer Strömungsverbindung zwischen der ersten Fluidkammer und dem stromabwärtigen Materialstrom; und
Einleiten eines Arbeitsfluids in eine Arbeitsfluidkammer der ersten Reglerpumpe (16), wobei das Arbeitsfluid das Fluidverdrängungselement (42) in einer Vorwärtsrichtung antreibt, um einen stromabwärtigen Druck zu generieren und das Material während des ersten Pumpenabgabezyklus stromabwärts aus der ersten Fluidkammer heraus zu einem stromabwärts des Fluidverdrängungselements angeordneten Applikator zu bewegen;
wobei die Strömungsverbindung zwischen der Arbeitsfluidkammer und der ersten Fluidkammer sowohl während des ersten Pumpen-Neubefüllungszyklus als auch während des ersten Pumpen-Abgabezyklus getrennt ist;
wobei das Fluidverdrängungselement umfasst:
eine Membran (74), die die erste Fluidkammer mindestens teilweise begrenzt; und
eine Welle (72), die mit der Membran verbunden ist und sich hinter der Membran in eine Wellenbohrung (78) innerhalb eines Körpers (44) der ersten Reglerpumpe hinein erstreckt;
wobei der Schritt des Generierens des ersten Befüllungssignals das Generieren des ersten Befüllungssignals mit einem Statussensor (40) mindestens teilweise auf der Grundlage einer Position der Welle (72) umfasst, und
wobei der Schritt des Generierens des ersten Pumpe-Voll-Signals das Generieren des ersten Pumpe-Voll-Signals mit dem Statussensor (40) mindestens teilweise auf der Grundlage einer Position der Welle (72) umfasst.

## Revendications

1. Pompe de régulation (16) comprenant:
une première chambre à fluide (48);
une première soupape d'entrée (38a) configurée pour contrôler un écoulement de fluide dans la première chambre de fluide;
une première soupape de sortie (38b) configurée pour contrôler l'écoulement de fluide hors de la première chambre de fluide; et
un élément de déplacement de fluide (42) délimitant au moins partiellement la première chambre de fluide sur un premier côté de l'élément de déplacement de fluide et délimitant au moins partiellement une chambre de fluide de travail (50) sur un deuxième côté de l'élément de déplacement de fluide, l'élément de déplacement de fluide comprenant:
une membrane (74) délimitant au moins partiellement la première chambre de fluide; et
l'élément de déplacement de fluide étant configuré pour entraîner une matière en aval à travers la première soupape de sortie à une pression en aval; un capteur d'état (40) raccordé à la pompe de régulation, le capteur d'état étant configuré pour générer un premier signal de remplissage sur la base du volume de matière dans la première chambre de fluide étant à un volume de remplissage et pour générer un premier signal de pompe pleine sur la base du volume de matière à l'intérieur de la première chambre à fluide étant à un volume complet,
dans lequel la première soupape de sortie est configurée pour être dans une position ouverte uniquement lorsque la première soupape d'entrée est dans une position fermée de telle sorte que la pression aval soit isolée et indépendante d'une pression amont,
dans lequel le premier élément de déplacement de fluide est configuré pour être entraîné sur une course avant par un fluide de travail disposé à l'intérieur de la chambre de fluide de travail, **caractérisé par** l'élément de déplacement de fluide comprenant en outre:
un arbre (72) raccordé à et s'étendant vers l'arrière du membrane dans un alésage d'arbre (78) à l'intérieur d'un corps (44) de la pompe de régulation;
dans lequel le capteur d'état est configuré pour générer le premier signal de remplissage et le premier signal de pompe pleine sur la base au moins en partie d'une position de l'arbre et
dans lequel le premier élément de déplacement de fluide est configuré pour être entraîné sur une course vers l'arrière par une pression de fluide du fluide disposée en amont de la première soupape d'entrée; et
la première chambre de fluide est isolée fluidiquement de la chambre de fluide de travail lorsque la première soupape de sortie est en position ouverte et la première soupape d'entrée est en position fermée, et la première chambre de fluide est isolée de manière fluidique de la chambre de fluide de travail lorsque la première soupape d'entrée est dans une position ouverte et la première soupape de sortie est dans une position fermée; et
l'élément de déplacement de fluide est configuré pour entraîner le matière en aval à travers la première soupape de sortie vers un applicateur disposé en aval de l'élément de déplacement de fluide.

2. Pompe de régulation selon la revendication 1, dans laquelle:
le corps (44) est raccordé à une plaque de recouvrement (46), et l'élément de déplacement de fluide est retenu entre le corps et la plaque de recouvrement;
la chambre de fluide de travail (50) est définie par le corps et l'élément de déplacement de fluide, et la première chambre de fluide est définie par la plaque de recouvrement et l'élément de déplacement de fluide.

3. Pompe de régulation selon la revendication 2, comprenant en outre:
une soupape pilote (86) disposée dans le corps, et une broche (100) de la soupape pilote s'étendant dans la chambre de fluide de travail;
une plaque de membrane (90) disposée sur la membrane, la plaque de membrane étant configurée pour entrer en contact avec la broche et entraîner la soupape pilote vers une position ouverte lorsque la première chambre de fluide est au plein volume;
dans lequel le capteur d'état est configuré pour générer le premier signal de pompe pleine sur la base au moins en partie du fait que la soupape pilote est en position ouverte, ainsi que de la position de l'arbre.

4. Pompe de régulation selon la revendication 3, dans laquelle le capteur d'état comprend un transducteur de pression configuré pour détecter un changement de pression à l'intérieur d'un passage de signal (94) à l'intérieur du corps, le passage de signal (94) s'étendant entre l'alésage d'arbre et un orifice de capteur d'état et en communication fluidique avec la soupape pilote.

5. Système de régulation de débit (10) comprenant:
une première pompe de régulation (16) selon une quelconque des revendications 1 à 4;
une alimentation en matière (14) disposée en amont de la première pompe de régulation et raccordée fluidiquement à la première soupape d'entrée, l'alimentation en matière étant configurée pour fournir le matière à la première soupape d'entrée à la pression amont; et
un applicateur (18) disposé en aval de la première pompe de régulation et raccordé fluidiquement à la première soupape de sortie;
dans lequel la première pompe de régulation est configurée pour isoler fluidiquement l'alimentation en matière de l'applicateur.

6. Système de régulation de débit selon la revendication 5, comprenant en outre:
un premier actionneur (20) raccordé à la première soupape d'entrée et à la première soupape de sortie; et
dans lequel le premier actionneur est configuré pour fournir un fluide moteur à la première soupape d'entrée sur la base du premier signal de remplissage, pour amener ainsi la première soupape d'entrée à se déplacer vers la position ouverte, et pour évacuer le fluide moteur de la première soupape de sortie sur la base du premier signal de remplissage, pour amener ainsi la première soupape de sortie à passer en position fermée.

7. Système de régulation de débit selon la revendication 5 ou la revendication 6, comprenant en outre:
un contrôleur (12) configuré pour contrôler l'écoulement de matière, le contrôleur comprenant:
un processeur (34); et
une mémoire (32) codée avec des instructions qui, lorsqu'elles sont exécutées par le processeur, amènent le processeur à générer une première commande de remplissage sur la base du premier signal de remplissage, la première commande de remplissage étant configurée pour amener la première pompe de régulation à passer par un premier cycle de remplissage ;
dans lequel la première soupape d'entrée est configurée pour s'ouvrir en réponse à la première commande de remplissage de telle sorte que le matière puisse s'écouler dans la première chambre de fluide à travers la première soupape d'entrée, et la première soupape de sortie est configurée pour se fermer en réponse à la première commande de remplissage de sorte que le matière soit empêchée de s'écouler hors de la première chambre de fluide à travers la première soupape de sortie.

8. Système de régulation de débit selon la revendication 7, dans lequel:
la mémoire est codée avec des instructions qui, lorsqu'elles sont exécutées par le processeur, amènent le processeur à générer une première commande de distribution basée sur le premier signal de pompe pleine;
la première soupape d'entrée est configurée pour se fermer en réponse à la première commande de distribution de telle sorte que la première chambre de fluide soit isolée fluidiquement de l'alimentation en matière, et
la première soupape de sortie est configurée pour s'ouvrir en réponse à la première commande de distribution de telle sorte que la première chambre de fluide soit raccordée fluidiquement à l'applicateur.

9. Système de régulation de débit selon la revendication 8, dans lequel un deuxième actionneur est configuré pour fournir une alimentation en fluide de travail à la première pompe de régulation sur la base de la première commande de distribution, le fluide de travail étant configuré pour entraîner l'élément de déplacement de fluide à travers la première chambre de fluide et pour générer la pression aval.

10. Système de régulation de débit selon une quelconque des revendications 5 à 9, dans lequel le capteur d'état est choisi dans le groupe constitué d'un transducteur linéaire et d'un transducteur de pression.

11. Système de régulation de débit selon la revendication 8, comprenant en outre:
une deuxième pompe de régulation (16b) raccordée fluidiquement à l'alimentation en matière et à l'applicateur, la deuxième pompe de régulation comprenant:
une deuxième chambre à fluide;
une deuxième soupape d'entrée (38c) configurée pour contrôler l'écoulement de fluide dans la deuxième chambre de fluide;
une deuxième soupape de sortie (38d) configurée pour contrôler l'écoulement de fluide hors de la deuxième chambre de fluide;
un deuxième élément de déplacement de fluide (42) délimitant au moins partiellement la deuxième chambre de fluide, le deuxième élément de déplacement de fluide étant configuré pour entraîner le matière en aval à travers la deuxième soupape de sortie à la pression aval; et
un deuxième capteur d'état (40b) configuré pour détecter un volume de matière dans la deuxième chambre de fluide et pour générer un deuxième signal de remplissage sur la base du volume de matière étant à un volume de remplissage et pour générer un deuxième signal de pompe pleine sur la base du volume du matériel étant à un volume complet;
dans lequel le contrôleur est configuré pour générer une deuxième commande de distribution sur la base du premier signal de remplissage; et
dans lequel la deuxième soupape d'entrée est configurée pour se fermer en réponse à la deuxième commande de distribution de telle sorte que la deuxième chambre de fluide soit isolée fluidiquement de l'alimentation en matière, et la deuxième soupape de sortie est configurée pour s'ouvrir en réponse à la deuxième commande de distribution de telle sorte que le la deuxième chambre de fluide soit raccordée fluidiquement à l'applicateur.

12. Système de régulation de débit selon la revendication 11, dans lequel:
le processeur est configuré pour générer une deuxième commande de remplissage sur la base du deuxième signal de remplissage et pour générer une première commande de distribution basée sur le deuxième signal de remplissage; et
la première soupape d'entrée est configurée pour se fermer en réponse à la première commande de distribution et la première soupape de sortie est configurée pour s'ouvrir en réponse à la première commande de distribution, la deuxième soupape d'entrée est configurée pour s'ouvrir en réponse à la deuxième commande de remplissage, et la deuxième soupape de sortie est configurée pour se fermer en réponse à la deuxième commande de remplissage.

13. Système de régulation de débit selon la revendication 11, comprenant en outre:
un deuxième actionneur configuré pour fournir une deuxième alimentation en fluide de travail à la deuxième pompe de régulation sur la base de la deuxième commande de distribution et une première alimentation en fluide de travail à la première pompe de régulation sur la base de la première commande de distribution;
dans lequel la deuxième alimentation en fluide de travail est configurée pour entraîner le deuxième élément de déplacement de fluide pour produire la pression aval, et la première alimentation en fluide de travail est configurée pour entraîner le premier élément de déplacement de fluide pour produire la pression aval.

14. Procédé de régulation de flux, le procédé comprenant de:
générer un premier signal de remplissage sur la base d'un volume de matière réel dans une première chambre de fluide d'une première pompe de régulation (16) étant à un volume de remplissage; effectuer un premier cycle de remplissage de pompe basé sur une première commande de remplissage pour remplir la première pompe de régulation avec un matière, dans lequel le premier cycle de remplissage de pompe comprend:
isoler fluidiquement la première chambre de fluide d'un écoulement de matière en aval;
raccorder fluidiquement la première chambre de fluide à un écoulement de matière en amont ayant une première pression de fluide **caractérisé par**
entraîner un élément de déplacement de fluide (42) de la première pompe de régulation dans une direction vers l'arrière avec la première pression de fluide de l'écoulement de matière en amont pour augmenter un volume de la première chambre de fluide: et
générer un premier signal de pompe pleine sur la base du volume de matière à l'intérieur de la première chambre de fluide étant à un volume plein; et
effectuer un premier cycle de distribution de pompe sur la base d'une première commande de distribution, dans lequel le premier cycle de distribution de pompe comprend de:
isoler fluidiquement la première chambre de fluide de l'écoulement de matière en amont;
raccorder fluidiquement la première chambre de fluide à l'écoulement de matière en aval; et
fournir un fluide de travail à une chambre de fluide de travail de la première pompe de régulation (16), le fluide de travail entraînant l'élément de déplacement de fluide (42) dans une direction vers l'avant pour générer une pression aval et entraîner le matière en aval hors de la première chambre de fluide vers un applicateur disposé en aval de l'élément de déplacement de fluide pendant le premier cycle de distribution de pompe;
dans lequel la chambre de fluide de travail est isolée fluidiquement de la première chambre de fluide pendant chacun du premier cycle de remplissage de pompe et du premier cycle de distribution de pompe;
dans lequel l'élément de déplacement de fluide comprend:
une membrane (74) délimitant au moins partiellement la première chambre de fluide; et
un arbre (72) raccordé à et s'étendant vers l'arrière de la membrane dans un alésage d'arbre (78) à l'intérieur d'un corps (44) de la première pompe de régulation;
dans lequel l'étape de génération du premier signal de remplissage comprend la génération du premier signal de remplissage avec un capteur d'état (40) sur la base au moins en partie d'une position de l'arbre (72), et dans lequel l'étape de génération du premier signal de remplissage de pompe comprend la génération du premier signal de pompe pleine avec le capteur d'état (40) sur la base au moins en partie d'une position de l'arbre (72) .
